(19) Europäisches Patentamt
European Patent Office
Office européen des brevets

(11) EP 4 718 839 A1

(12) EUROPEAN PATENT APPLICATION

(43) Date of publication:
01.04.2026 Bulletin 2026/14

(21) Application number: 25204538.0

(22) Date of filing: 25.09.2025

(51) International Patent Classification (IPC):
H04N 9/31 (2006.01)

(52) Cooperative Patent Classification (CPC):
H04N 9/3182; H04N 9/3147; H04N 9/3194

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.09.2024 JP 2024168461

(71) Applicant: Seiko Epson Corporation
Tokyo 160-8801 (JP)

(72) Inventors:
• FURUI, Shiki
Suwa-shi, 392-8502 (JP)
• IMAI, Momoko
Suwa-shi, 392-8502 (JP)

(74) Representative: Lewis Silkin LLP
Arbor
255 Blackfriars Road
London SE1 9AX (GB)

(54) CONTROL METHOD FOR PROJECTING APPARATUS AND NON-TRANSITORY COMPUTER-READABLE STORAGE MEDIUM STORING PROGRAM

(57) In a measurement pattern used for correction of a color of a low gradation close to black, a difference value between the lowest first gradation value and the second lowest first gradation value among a plurality of first gradation values included in a plurality of pieces of gradation data is smaller than a difference value between the highest first gradation value and the second highest first gradation value among the plurality of first gradation values input.

## FIG. 1

## Description

The present application is based on, and claims priority from JP Application Serial Number 2024-168461, filed September 27, 2024, the disclosure of which is hereby incorporated by reference herein in its entirety.

BACKGROUND

1. Technical Field

The present disclosure relates to a control method for a projecting apparatus and a non-transitory computer-readable storage medium storing a program.

2. Related Art

JP-A-2016-161918 discloses a method for projecting four measurement patterns from a first measurement pattern to a fourth measurement pattern when a projecting apparatus corrects white balance of gray of an intermediate gradation. Here, the first measurement pattern is image data representing gray of the intermediate gradation. The three measurement patterns from the second measurement pattern to the fourth measurement pattern are patterns obtained by changing each of color components included in the first measurement pattern.

JP-A-2016-161918 is an example of the related art.

In the related art, when a low-gradation color close to black is corrected, a change in an output luminance with respect to a change in a gradation is small at a low gradation due to a gamma characteristic which is a characteristic indicating a relationship between the gradation and the output luminance, and an accuracy of detecting a measurement pattern necessary for black correction is reduced. In this case, the accuracy can be improved by using the first measurement pattern described above, but it is necessary to select three measurement patterns from the second measurement pattern to the fourth measurement pattern according to the gamma characteristic. However, in JP-A-2016-161918, a selection method according to the gamma characteristic is not considered.

SUMMARY

According to an aspect of the present disclosure, there is provided a control method for a projecting apparatus including acquiring, a plurality of pieces of measurement data based on an output from a sensor that measures reflected light of a plurality of types of colored light, which correspond one-to-one to a plurality of pieces of gradation data, reflected by a projection surface when the plurality of types of colored light are projected from a projecting apparatus onto the projection surface based on the plurality of pieces of gradation data, and calculating correction data for correcting a color of an image displayed on the projection surface based on the plurality of pieces of gradation data and the plurality of pieces of measurement data. The plurality of pieces of gradation data include a plurality of first gradation values indicating at least one gradation for a first color component, a plurality of second gradation values indicating at least one gradation for a second color component, and a plurality of third gradation values indicating at least one gradation for a third color component. The plurality of pieces of measurement data include a first brightness value indicating brightness of reflected light of colored light corresponding to the first color component having the first gradation value, a second brightness value indicating brightness of reflected light of colored light corresponding to the second color component having the second gradation value, and a third brightness value indicating brightness of reflected light of colored light corresponding to the third color component having the third gradation value. A difference value between a lowest first gradation value and a second lowest first gradation value among the plurality of first gradation values included in the plurality of pieces of gradation data is smaller than a difference value between a highest first gradation value and a second highest first gradation value among the plurality of first gradation values input.

According to an aspect of the present disclosure, there is provided a non-transitory computer-readable storage medium storing a program that controls a projecting apparatus, and the program causes the projecting apparatus to execute acquiring a plurality of pieces of measurement data based on an output from a sensor that measures reflected light of a plurality of types of colored light, which correspond one-to-one to a plurality of pieces of gradation data, reflected by a projection surface when the plurality of types of colored light are projected from a projecting apparatus onto the projection surface based on the plurality of pieces of gradation data, and calculating correction data for correcting a color of an image displayed on the projection surface based on the plurality of pieces of gradation data and the plurality of pieces of measurement data. The plurality of pieces of gradation data include a plurality of first gradation values indicating at least one gradation for a first color component, a plurality of second gradation values indicating at least one gradation for a second color component, and a plurality of third gradation values indicating at least one gradation for a third color component. The plurality of pieces of measurement data include a first brightness value indicating brightness of reflected light of colored light corresponding to the first color component having the first gradation value, a second brightness value indicating brightness of reflected light of colored light corresponding to the second color component having the second gradation value, and a third brightness value indicating brightness of reflected light of colored light corresponding to the third color component having the third gradation value. A difference value between a lowest first gradation value and a second lowest first gradation value among the plurality of first gradation values included in the plurality of pieces of gradation data is smaller than a difference value between a highest first gradation value and a second highest first gradation value among the plurality of first gradation values input.

BRIEF DESCRIPTION OF THE DRAWINGS

FIG. 1 is a diagram illustrating an overall configuration of a projecting system 1.
FIG. 2 is a block diagram of a projecting apparatus 10A.
FIG. 3 is a graph illustrating a $\gamma$ curve corresponding to a relationship between an input gradation and an output luminance in an overlapping area DR.
FIG. 4 is a graph illustrating a $\gamma$ curve corresponding to a relationship between the input gradation and the output luminance in a non-overlapping area NR.
FIG. 5 is a graph illustrating a $\gamma$ curve corresponding to a relationship between the input gradation and the output luminance in the overlapping area DR and the non-overlapping area NR.
FIG. 6 is a diagram illustrating a projecting method for a measurement pattern by the projecting apparatus 10A.
FIG. 7 is a functional block diagram of a corrector 136.
FIG. 8 is a flowchart illustrating an operation example of the projecting apparatus 10A according to a first embodiment.
FIG. 9 is a diagram illustrating an example of lattice points LP.
FIG. 10 is a diagram illustrating an example of the lattice points LP.
FIG. 11 is a diagram illustrating an example of the lattice points LP.
FIG. 12 is a diagram illustrating an example of an interpolation curve $R(r, 34, 34)$ for interpolating a measured value of a R component among measured values $(R, G, B)$ calculated by a processing device 13.
FIG. 13 is a diagram illustrating an example of an interpolation curve $G(r, 34, 34)$ for interpolating a measured value of a G component among the measured values $(R, G, B)$ calculated by the processing device 13.
FIG. 14 is a diagram illustrating an example of an interpolation curve $B(r, 34, 34)$ for interpolating a measured value of a B component among the measured values $(R, G, B)$ calculated by the processing device 13.
FIG. 15 is a diagram illustrating an example of an interpolation curve $R(34, g, 34)$ for interpolating a measured value of the R component among measured values $(R, G, B)$ calculated by the processing device 13.
FIG. 16 is a diagram illustrating an example of an interpolation curve $G(34, g, 34)$ for interpolating a measured value of the G component among the measured values $(R, G, B)$ calculated by the processing device 13.
FIG. 17 is a diagram illustrating an example of an interpolation curve $B(34, g, 34)$ for interpolating a measured value of the B component among the measured values $(R, G, B)$ calculated by the processing device 13.
FIG. 18 is a diagram illustrating an example of an interpolation curve $R(34, 34, b)$ for interpolating a measured value of the R component among the measured values $(R, G, B)$ calculated by the processing device 13.
FIG. 19 is a diagram illustrating an example of an interpolation curve $G(34, 34, b)$ for interpolating a measured value of the G component among the measured values $(R, G, B)$ calculated by the processing device 13.
FIG. 20 is a diagram illustrating an example of an interpolation curve $B(34, 34, b)$ for interpolating a measured value of the B component among the measured values $(R, G, B)$ calculated by the processing device 13.
FIG. 21 is a graph illustrating Formulas 10 to 12 in a space with the R component, the G component, and the B component as three axes.

DESCRIPTION OF EMBODIMENTS

An aspect for implementing the present disclosure will hereinafter be described with reference to the drawings. Note, however, that dimensions and scales of portions in the drawings are made different from actual ones as appropriate. Furthermore, the embodiment described below is a preferable specific example of the present disclosure, and various technically preferable restrictions are therefore imposed on the embodiment, but the scope of the present disclosure is not limited to the embodiment unless there is a description that the present disclosure is particularly limited to the embodiment in the following description.

1: First Embodiment

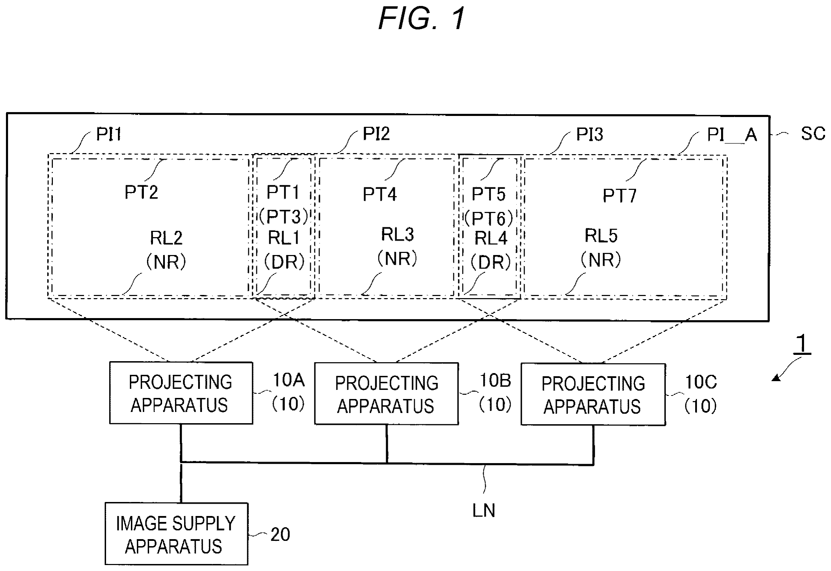

Hereinafter, a projecting system 1 according to a first embodiment will be described with reference to FIGS. 1 to 21.

1-1: Configuration of First Embodiment

1-1-1: Overall Configuration

FIG. 1 is a diagram illustrating an overall configuration of the projecting system 1. The projecting system 1 includes a projecting apparatus 10A, a projecting apparatus 10B, a projecting apparatus 10C, and an image supply apparatus 20. The projecting apparatus 10A is an example of a "first projecting apparatus". The projecting apparatus 10B is an example of a "second projecting apparatus". The projecting apparatus 10C is an example of a "third projecting apparatus".

The projecting apparatus 10A, the projecting apparatus 10B, the projecting apparatus 10C, and the image supply apparatus 20 are communicably coupled to each other via a communication line LN.

The projecting apparatus 10A, the projecting apparatus 10B, and the projecting apparatus 10C project various images or videos onto a projection surface SC. As an example, among the projecting apparatus 10A, the projecting apparatus 10B, and the projecting apparatus 10C, the projecting apparatus 10A is a primary projecting apparatus for the projecting apparatus 10B and the projecting apparatus 10C. The projecting apparatus 10B and the projecting apparatus 10C are secondary projecting apparatuses for the projecting apparatus 10A. Specifically, the projecting apparatus 10A transmits various control signals to each of the projecting apparatus 10B and the projecting apparatus 10C. As a result, the projecting apparatus 10A controls the projecting apparatus 10B and the projecting apparatus 10C. The control signal described above includes various correction values to be described later.

The image supply apparatus 20 supplies various images to the projecting apparatus 10A, the projecting apparatus 10B, and the projecting apparatus 10C. Each of the projecting apparatus 10A, the projecting apparatus 10B, and the projecting apparatus 10C projects the image supplied from the image supply apparatus 20 onto the projection surface SC.

Alternatively, the image supply apparatus 20 may supply the image only to the projecting apparatus 10A, and the projecting apparatus 10A may supply the image projected by each projecting apparatus 10 to each of the projecting apparatus 10B and the projecting apparatus 10C. In the present embodiment, when the projecting apparatus 10A to the projecting apparatus 10C are not distinguished, they are referred to as the projecting apparatus 10.

In the projecting system 1, each of the projecting apparatus 10A, the projecting apparatus 10B, and the projecting apparatus 10C may read an image to be projected from a storage device 14 provided therein and project the image onto the projection surface SC. Alternatively, the projecting apparatus 10A may read the image to be projected from the storage device 14 provided in the projecting apparatus 10A, and the projecting apparatus 10A may supply the image to be projected by each projecting apparatus to each of the projecting apparatus 10B and the projecting apparatus 10C. In this case, the projecting system 1 may not necessarily include the image supply apparatus 20.

In the example illustrated in FIG. 1, the projecting apparatus 10A projects a projection image PI1 onto the projection surface SC. The projecting apparatus 10B projects a projection image PI2 onto the projection surface SC. The projecting apparatus 10C projects a projection image PI3 onto the projection surface SC. The projection image PI1, the projection image PI2, and the projection image PI3 are projected so as to partially overlap each other on the projection surface SC, whereby one projection image PI_A is displayed as a whole onto the projection surface SC.

Specifically, the projection image PI1 includes a portion PT1 and a portion PT2. The projection image PI2 includes a portion PT3, a portion PT4, and a portion PT5. The projection image PI3 includes a portion PT6 and a portion PT7. The portion PT1 of the projection image PI1 and the portion PT3 of the projection image PI2 are projected on the projection surface SC in an overlapping manner. Further, the portion PT5 of the projection image PI2 and the portion PT6 of the projection image PI3 are projected on the projection surface SC in an overlapping manner.

As a result, an area RL1 of the projection image PI_A includes the portion PT1 of the projection image PI1 and the portion PT3 of the projection image PI2. An area RL2 of the projection image PI_A includes only the portion PT2 of the projection image PI1. An area RL3 of the projection image PI_A includes only the portion PT4 of the projection image PI2. An area RL4 of the projection image PI_A includes the portion PT5 of the projection image PI2 and the portion PT6 of the projection image PI3. An area RL5 of the projection image PI_A includes the portion PT7 of the projection image PI3.

Among the plurality of areas RL of the projection image PI_A, the area RL1 and the area RL4 are overlapping areas DR. Further, the area RL2, the area RL3, and the area RL5 are non-overlapping areas NR. The overlapping area DR is an example of a "first area". The non-overlapping area NR is an example of a "second area".

1-1-2: Configuration of Projecting Apparatus

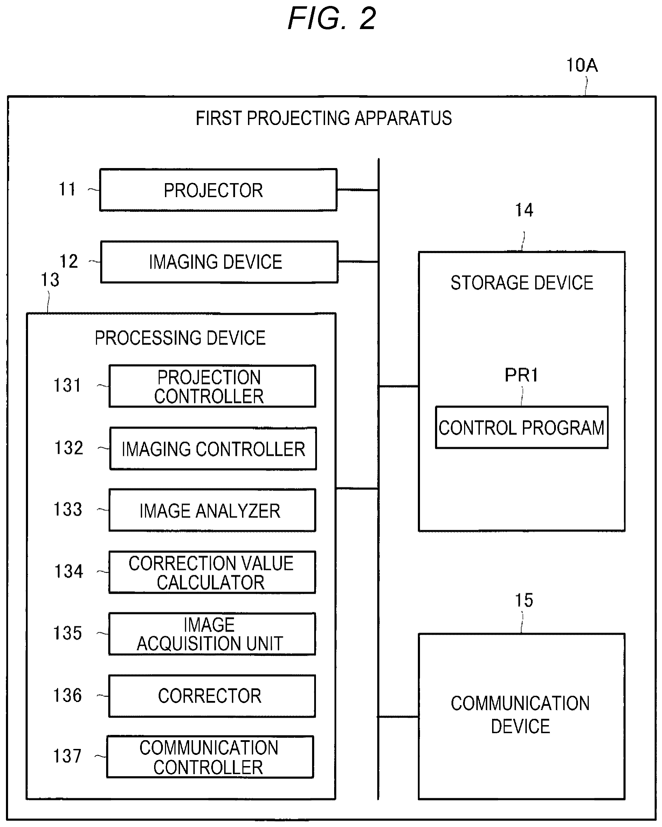

FIG. 2 is a block diagram of the projecting apparatus 10A. The projecting apparatus 10B and the projecting apparatus 10C may have the same configuration as the projecting apparatus 10A. Alternatively, the projecting apparatus 10B and the projecting apparatus 10C may have a configuration in which at least one of an imaging device 12, an imaging controller 132, an image analyzer 133, a correction value calculator 134, an image acquisition unit 135, and a corrector 136, which will be described later, is not provided while having a configuration essential as a projecting apparatus.

The projecting apparatus 10A includes a projector 11, the imaging device 12, the processing device 13, the storage device 14, and a communication device 15.

The elements of the projecting apparatus 10A are coupled to each other via a single bus or multiple buses for information communication. The elements of the projecting apparatus 10A may be configured with one or more instruments, and some elements of the projecting apparatus 10A may be omitted.

The projector 11 is an optical device that projects various projection images PI onto the projection surface SC such as a screen or a wall. The projector 11 projects various projection images PI under a control of the processing device 13. The projector 11 includes, for example, a light source, a projecting lens, a dichroic mirror, a prism, and a liquid crystal panel, modulates light from the light source using the liquid crystal panel, and projects the modulated light onto the projection surface SC via the projecting lens. The light source, the projecting lens, the dichroic mirror, and the prism are examples of a projection optical system.

The imaging device 12 is a device that captures the projection image PI projected onto the projection surface SC. The imaging device 12 captures various images under the control of the processing device 13. The imaging device 12 is, for example, an image sensor. The imaging device 12 is an example of a "sensor".

The processing device 13 is a processor that performs an overall control of the projecting apparatus 10A and is configured with, for example, a single chip or a plurality of chips. The processing device 13 is configured, for example, with a central processing unit (CPU) including an interface with a peripheral apparatus, an arithmetic device, a register, and so on. A part or all of the functions of the processing device 13 may be implemented by hardware such as a digital signal processor (DSP), an application-specific integrated circuit (ASIC), a programmable logic device (PLD), or a field-programmable gate array (FPGA). The processing device 13 may include a system on chip (SoC). The processing device 13 performs various types of processing in parallel or in sequence.

The storage device 14 is a recording medium readable by the processing device 13, and stores a plurality of programs including a control program PR1 to be executed by the processing device 13. Further, the storage device 14 stores a pattern image for measurement projected from the projector 11 at the time of correction to be described later. Hereinafter, the pattern image for measurement may be referred to as a measurement pattern. The storage device 14 may be configured, for example, with at least one of a read only memory (ROM), an erasable programmable ROM (EPROM), an electrically erasable programmable ROM (EEPROM), and a random access memory (RAM). The storage device 14 may be called a register, a cache, a main memory, a main storage device, or the like.

The communication apparatus 15 is hardware serving as a transmitting and receiving device for communicating with other devices. The communication device 15 is also called, for example, a network device, a network controller, a network card, or a communication module or the like. The communication device 15 may include a connector for wired connection and an interface circuit compatible with the above connector. Further, the communication device 15 may include a wireless communication interface. Examples of the connector and the interface circuit for wired connection include those compliant with wired local area network (LAN), IEEE 1394, and a universal serial bus (USB). Further, examples of the wireless communication interface include an interface compliant with wireless LAN and Bluetooth (registered trademark).

The processing device 13 functions as a projection controller 131, the imaging controller 132, the image analyzer 133, the correction value calculator 134, the image acquisition unit 135, the corrector 136, and a communication controller 137 by reading and executing the control program PR1 from the storage device 14. Note that the control program PR1 may be transmitted from another apparatus such as a server that manages the projecting apparatus 10A via a communication network.

The projection controller 131 causes the projector 11 to project the measurement pattern described above onto the projection surface SC. Further, the projection controller 131 causes the projector 11 to project the image acquired from the image supply apparatus 20 by the image acquisition unit 135 to be described later onto the projection surface SC.

The imaging controller 132 causes the imaging device 12 to capture an image of the reflected light of the measurement pattern projected onto the projection surface SC.

The image analyzer 133 analyzes the reflected light of the measurement pattern imaged by the imaging device 12 and calculates a measured value indicating a color of the measurement pattern in a captured image. The measured value is an example of "measurement data".

The correction value calculator 134 calculates a correction value to be set in the corrector 136 to be described later based on the measured value calculated by the image analyzer 133.

Hereinafter, the measurement pattern projected by the projector 11 in the present embodiment will be described.

As an example, a projecting apparatus having a normal color adjustment function divides colors from the lowest gradation on a black side to the highest gradation on a white side substantially equally, projects colored light having the color of the gradation at each division point, and calculates a correction value based on an imaging result obtained by imaging the colored light projected onto the projection surface. At this time, the projecting apparatus estimates a color of an intermediate gradation between a gradation of first colored light and a gradation of second colored light based on an interpolation operation such as spline interpolation, and calculates the correction value based on the estimated result.

Alternatively, as another example, a projecting apparatus having a normal color adjustment function projects colored light having a color based on gray of the intermediate gradation and calculates a correction value based on an imaging result obtained by imaging the colored light projected onto the projection surface. In this case, colors other than gray are estimated based on the interpolation operation using a property of the additive color mixture, and the correction value is calculated based on the estimated result.

However, since the colored light on the low gradation side close to black with a gradation of zero is the colored light obtained by gradually adding RGB modulated light to the colored light output from the liquid crystal panel having black with a gradation of zero, that is, when a transmittance of the liquid crystal panel is zero, there is a problem that a change in a chromaticity u'v' is large and an estimation error is large in a measurement method of the related art. Specifically, when the transmittance of the liquid crystal panel increases from a state in which the gradation of the liquid crystal panel is zero, a ratio between RGB modulated light components, that is, R light, G light, and B light, tend to change greatly. This change in the ratio causes a change in the chromaticity u'v'. The unevenness of the chromaticity u'v' caused when the transmittance of the liquid crystal panel is 0 is caused by, for example, color unevenness of the projection optical system. The color unevenness of the projection optical system is caused by, for example, chromatic aberration of the projecting lens and manufacturing accuracy of the prism.

Further, in a normal projecting apparatus, as an example, since the input/output characteristic is adjusted to $\gamma$ = 2.2, the change in the light amount when the gradation changes is small in the vicinity of the gradation of zero. Therefore, in order to correct the black color unevenness, it is necessary to increase an output gradation (correction value) after the correction to a gradation at which the change in the amount of light when the gradation changes can be secured to some extent. Noted that the "output gradation" means the gradation of the colored light projected onto the projection surface SC, and means the gradation output from the corrector 136 to be described later to the projector 11.

In order to correct the "black floating" which is the difference in brightness between the overlapping area DR and the non-overlapping area NR, it is necessary to increase the output gradation (correction value) after the correction so that the brightness of the non-overlapping area NR is the same as the brightness of the overlapping area DR.

As in the related art, when black colored light with the gradation of zero is projected onto the projection surface SC as a reference projection light, the imaging result of the reflected light reflected by the projection surface SC is analyzed, and the measured value is calculated, the gradation separated from the gradation after the correction is measured, and thus an interpolation error increases. As a result, there is a problem that a highly accurate correction value cannot be calculated. In short, as an example, when black is corrected using projection light of each gradation obtained by dividing a gradation width from the gradation 0 to the gradation 1023 into eight equal parts, there is a problem that the interpolation error increases.

Since the projection light on the low gradation side close to black has a low luminance, an influence of a dark current noise, an optical shot noise, and the like increases. Therefore, when the colored light of the monochromatic light of R, G, and B is projected onto the projection surface for each projecting apparatus, and the measured value is calculated by analyzing the imaging result of the reflected light from the projection surface, there is a problem that an error included in the measured value increases.

Therefore, in the present embodiment, the projection light on the low gradation side close to black projected as the measurement pattern is projection light of a plurality of gradations.

The gradation of the measurement pattern for the overlapping area DR is set to three or more gradations including a lower gradation and a higher gradation than an expected gradation which is an output gradation corresponding to an output luminance (brightness) after the color unevenness correction. The reason why the gradation of the measurement pattern for the overlapping area DR is set to three gradations or more is that at least three gradations are required for curve fitting in consideration of $\gamma$ = 2.2 which is the input/output characteristic. As an example, these three gradations are a gradation A, a gradation B, and a gradation C (A < B < C). The gradation A is an example of a "first value". The gradation B is an example of a "second value". The gradation C is an example of a "third value". The projecting apparatus 10A according to the present embodiment can measure the gradation necessary for correcting the color unevenness on the low gradation side close to black in detail by setting the gradation of the measurement pattern for the overlapping area DR to three gradations or more.

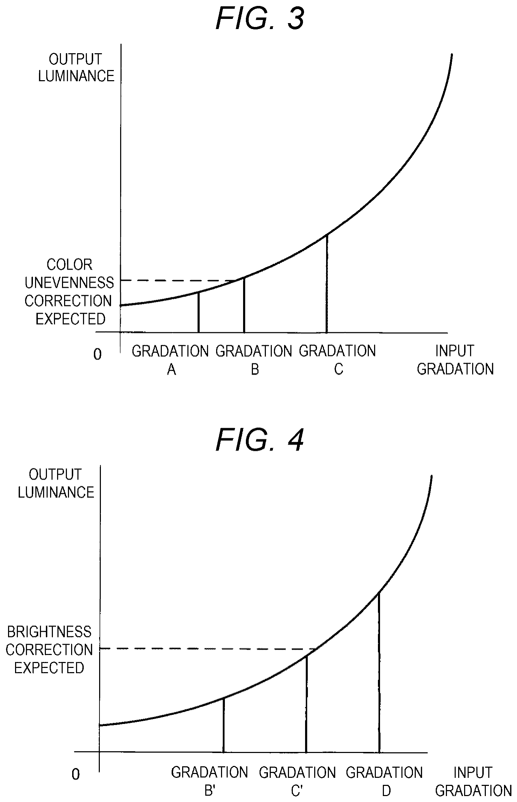

FIG. 3 is a graph illustrating a $\gamma$ curve corresponding to a relationship between the input gradation and the output luminance in the overlapping area DR.

As illustrated in FIG. 3, the gradation A is a gradation lower than the expected gradation, which is the output gradation corresponding to the output luminance after the color unevenness correction. Further, the gradation C is a gradation higher than the expected gradation, which is the output gradation corresponding to the output luminance after the color unevenness correction. The gradation B is a gradation between the gradation A and the gradation C.

As described above, in the gradation close to black having the gradation of zero, as illustrated in FIG. 3, even a small change in the output luminance results in a large change in chromaticity. Therefore, when the colored light having the gradation lower than the gradation A is used as the projection light, the correction error increases. Therefore, it is preferable to perform correction after making the black color brighter until the output luminance at which the $\gamma$ curve has a certain degree of inclination is obtained. The expected gradation corresponding to the output luminance at which the $\gamma$ curve has a certain degree of inclination is determined in advance. The projecting apparatus 10A according to the present embodiment measures the output gradation of at least three gradations including the gradation B, which is an intermediate gradation, in order to improve the accuracy of fitting when curve interpolation is performed using a $\gamma$ curve between the gradation A, which is the gradation lower than the expected gradation to some extent, and the gradation C, which is the gradation higher than the expected gradation to some extent.

The expected gradation is determined in advance depending on a degree of the color unevenness that originally exists in the projecting apparatus 10. For example, when the color unevenness can be prevented by slight adjustment, the expected gradation is a low gradation. Meanwhile, for example, when the color unevenness is large due to quality of the component (such as a projecting lens) used in the projecting apparatus, the expected gradation is set to a high gradation in order to secure the minimum adjustment range.

The gradation A can be determined based on the fact that the amount of light changes sufficiently when the gradation changes by one step. "The amount of light changes sufficiently" means that, for example, when the image analyzer 133 analyzes the imaging result of the measurement pattern before the gradation changes by one step and the imaging result of the measurement pattern after the gradation changes by one step, the amount of light changes to such an extent that the image analyzer 133 can detect a difference in light amount between the two that is greater than or equal to a predetermined value. As an example, the gradation A is set based on the fact that a color difference $\Delta u'v'$ becomes about 1/1000 when the gradation is changed by one step. For example, in the case of a projecting apparatus having a contrast ratio of 2000 : 1, the gradation A is a gradation of 20 or more when the maximum value of the gradation is 1023. In the case of a projecting apparatus having a contrast ratio of 3000 : 1, the gradation A is a gradation of 15 or more when the maximum value of the gradation is 1023.

The gradation C is a gradation equal to or smaller than the maximum value of 127 of a first divided gradation width obtained by dividing the gradation width from the gradation 0 to the gradation 1023 into eight. The gradation C may be a gradation equal to or smaller than the minimum value 128 of a second divided gradation width obtained by dividing the gradation width from the gradation 0 to the gradation 1023 into eight.

As a result, a difference value between the gradation A and the gradation B is smaller than a difference value between the highest gradation and a second highest gradation among the plurality of input gradations up to 1023 gradations. Here, as an example, the "highest gradation" is the highest gradation 1023 in an eighth divided gradation width obtained by dividing the gradation width from the gradation 0 to the gradation 1023 into eight. The "second highest gradation" is, for example, the lowest gradation 896 in the eighth divided gradation width obtained by dividing the gradation width from the gradation 0 to the gradation 1023 into eight.

In the present embodiment, the gradation width from the gradation 0 to the gradation 1023 is divided into eight sections, but is not particularly limited. For example, the gradation width from the gradation 0 to the gradation 1023 may be divided into seven sections or nine sections. When the gradation width from the gradation 0 to the gradation 1023 is divided into seven sections, for example, the maximum value of the first divided gradation width is 146, and the gradation C may be a gradation of 146 or less.

The gradation of the measurement pattern for the non-overlapping area NR is set to three or more gradations including a lower gradation and a higher gradation than an expected gradation, which is an output gradation corresponding to an output luminance after "black floating" is corrected. The reason why the gradation of the measurement pattern for the non-overlapping area NR is set to three gradations or more is that at least three gradations are required for curve fitting in consideration of $\gamma = 2.2$ which is the input/output characteristic. As an example, these three gradations are a gradation B', a gradation C', and a gradation D (B' < C' < D). The gradation B' is an example of a "fourth value". The gradation C' is an example of a "fifth value". The gradation D is an example of a "sixth value". The projecting apparatus 10A according to the present embodiment can measure the gradation necessary for the correction of "black floating" on the low gradation side close to black in detail by setting the gradation of the measurement pattern for the non-overlapping area NR to three gradations or more. The expected gradation is determined in advance by, for example, experiments or simulations.

FIG. 4 is a graph illustrating a $\gamma$ curve corresponding to a relationship between the input gradation and the output luminance in the non-overlapping area NR.

As illustrated in FIG. 4, the gradation B' is a gradation lower than the expected gradation, which the output gradation corresponding to the output luminance after the "black floating" is corrected. On the other hand, the gradation D is a gradation higher than the expected gradation, which is the output gradation corresponding to the output luminance after the "black floating" is corrected. The gradation C' is a gradation between the gradation B' and the gradation D.

The difference value between the gradation B' and the gradation C' is smaller than the difference value between the highest gradation and the second highest gradation among the plurality of input gradations up to the gradation 1023. Here, as an example, the "highest gradation" is the highest gradation 1023 in an eighth divided gradation width obtained by dividing the gradation width from the gradation 0 to the gradation 1023 into eight. The "second highest gradation" is, for example, the lowest gradation 896 in the eighth divided gradation width obtained by dividing the gradation width from the gradation 0 to the gradation 1023 into eight.

The gradation B' illustrated in FIG. 4 is higher than the gradation A illustrated in FIG. 3. In the overlapping area DR, since the projection light from the two projecting apparatuses 10 overlaps, the brightness of the projection image PI in the overlapping area DR is brightness of the two projecting apparatuses 10. In order to correct the "black floating", it is necessary to project the projection light with a higher gradation to the non-overlapping area NR than to the overlapping area DR, and thus the gradation B' needs to be higher than the gradation A.

When colored light with a bright gradation is projected in the overlapping area DR beyond a range in which color unevenness can be minimized, the overall contrast ratio deteriorates. For this reason, it is preferable to project the projection light having the gradation within a range in which the color unevenness can be minimized in the overlapping area DR.

By making the gradation B and the gradation B' equal to each other and making the gradation C and the gradation C' equal to each other among the gradation A, the gradation B, and the gradation C in FIG. 3 and the gradation B', the gradation C', and the gradation D in FIG. 4, a part of the measurement pattern can be shared by the correction related to the overlapping area DR and the correction related to the non-overlapping area NR.

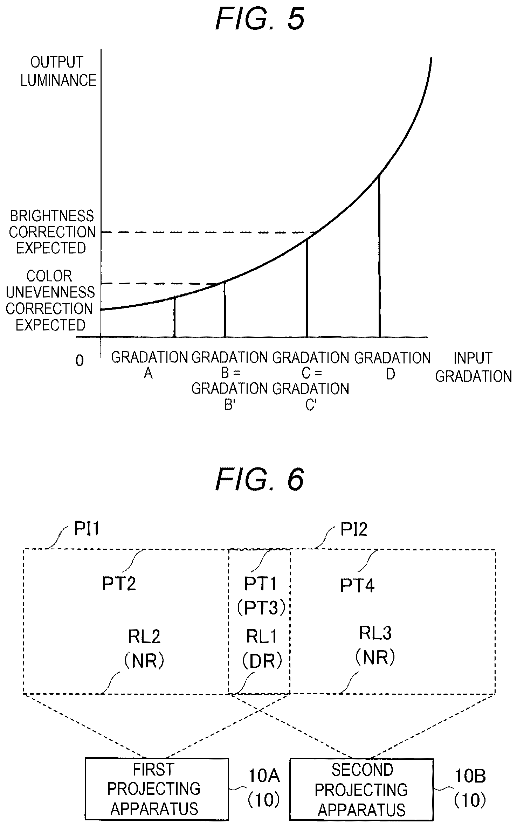

FIG. 5 is a graph illustrating a $\gamma$ curve corresponding to a relationship between the input gradation and the output luminance in the overlapping area DR and the non-overlapping area NR.

Specifically, the projection controller 131 may project measurement patterns of at least four gradations of the gradation A, the gradation B = the gradation B', the gradation C = the gradation C', and the gradation D onto the overlapping area DR and the non-overlapping area NR, and the image analyzer 133 may analyze the pattern image for measurement captured by the imaging device 12 to calculate the measured value. The projection controller 131 may further project the measurement pattern of the gradation 0 onto the overlapping area DR and the non-overlapping area NR, and the image analyzer 133 may analyze the pattern image for measurement captured by the imaging device 12 to calculate the measured value.

As a result, it is possible to reduce the number of measurement patterns and shorten a measurement time.

In order to increase the luminance of the measurement pattern, it is preferable that the measurement pattern is a color obtained by changing one color component among color components of a R component, a G component, and a B component based on a reference gray instead of a single color among the R component, the G component, and the B component. The R component is an example of a "first color component". The G component is an example of a "second color component". The B component is an example of a "third color component". In this case, it is preferable that the reference gray is set to be gray in which all of the R component, the G component, and the B component become the gradation B close to the output gradation after the color unevenness correction of the overlapping area DR. As a result, the gradation of the measurement pattern becomes the following ten patterns. Hereinafter, for convenience of description, values of the R component, the G component, and the B component of the measurement pattern 1 to the measurement pattern 10 are denoted by r, g, and b, respectively. r is an example of a "first gradation value". g is an example of a "second gradation value". b is an example of a "third gradation value".

Measurement pattern 1: (r, g, b) = (D, B, B)
Measurement pattern 2: (r, g, b) = (B, D, B)
Measurement pattern 3: (r, g, b) = (B, B, D)
Measurement pattern 4: (r, g, b) = (C, B, B)
Measurement pattern 5: (r, g, b) = (B, C, B)
Measurement pattern 6: (r, g, b) = (B, B, C)
Measurement pattern 7: (r, g, b) = (B, B, B)
Measurement pattern 8: (r, g, b) = (A, B, B)
Measurement pattern 9: (r, g, b) = (B, A, B)
Measurement pattern 10: (r, g, b) = (B, B, A)

When the measurement pattern includes the gradation 0, the following measurement pattern is also used.

Measurement pattern 11: (r, g, b) = (0, B, B)
Measurement pattern 12: (r, g, b) = (B, 0, B)
Measurement pattern 13: (r, g, b) = (B, B, 0)

The combination of (r, g, b) of the measurement patterns projected from the projector 11 onto the projection surface SC is an example of "gradation data". A gradation value of r in (r, g, b) is an example of the "first gradation value". A gradation value of g in (r, g, b) is an example of the "second gradation value". A gradation value of b in (r, g, b) is an example of the "third gradation value".

By using the above measurement pattern, it is possible to brighten the measurement pattern, improve an S/N ratio of the imaging device 12, and reduce an error of the measured value.

In a method of the related art, as an example, when the R component among the R component, the G component, and the B component is corrected, a measurement pattern in which only the liquid crystal panel corresponding to the R component among the liquid crystal panels is driven and black with the gradation 0 is output from the liquid crystal panels corresponding to the G component and the B component may be used. In the present embodiment, for the purpose of improving the S/N ratio, in order to brighten the measurement pattern, a measurement pattern with an increased R component, a measurement pattern with a decreased R component, a measurement pattern with an increased G component, a measurement pattern with a decreased G component, a measurement pattern with an increased B component, and a measurement pattern with a decreased B component are used from a gray pattern in which all of the R component, the G component, and the B component are at the gradation B.

FIG. 6 is a diagram illustrating a projecting method for a measurement pattern by the projecting apparatus 10A.

To simplify the description, in FIG. 6, the same elements as those in FIG. 1 are denoted by the same reference numerals. On the other hand, in FIG. 6, unlike FIG. 1, only the projection image PI1 projected from the projecting apparatus 10A and the projection image PI2 projected from the projecting apparatus 10B are illustrated, and the projection image PI3 projected from the projecting apparatus 10C is omitted. Further, in FIG. 6, since the projection image PI3 is omitted, the projection image PI2 accordingly has only the portion PT3 and the portion PT4, and does not have the portion PT5. Accordingly, the projection image PI2 includes the area RL1 and the area RL3, but does not include the area RL4.

In FIG. 6, the projection image PI1 projected by the projecting apparatus 10A and the projection image PI2 projected by the projecting apparatus 10B have the same measurement pattern. As an example, both the projection image PI1 and the projection image PI2 are the measurement pattern 1 described above. However, both the projection image PI1 and the projection image PI2 are not limited to the measurement pattern 1, and both may be any of the measurement pattern 2 to the measurement pattern 13.

The projection of the projection image PI1 by the projecting apparatus 10A and the projection of the projection image PI2 by the projecting apparatus 10B are synchronized. That is, the projection image PI2 is projected at the same timing as the projection image PI1.

The combination (r, g, b) of the R component, the G component, and the B component of the first measurement pattern as the projection image PI1 projected from the projecting apparatus 10A is an example of "first gradation data". The colored light representing the first measurement pattern is an example of "first colored light". The colored light representing the first measurement pattern as the projection image PI2 projected from the projecting apparatus 10B is an example of "second colored light". In the overlapping area DR, the "first colored light" and the "second colored light" overlap each other.

The combination (r, g, b) of the R component, the G component, and the B component of the second measurement pattern as the projection image PI1 projected from the projecting apparatus 10A is an example of "second gradation data". The colored light representing the second measurement pattern is an example of "third colored light". The colored light representing the second measurement pattern as the projection image PI2 projected from the projecting apparatus 10B is an example of "fourth colored light". In the overlapping area DR, the "third colored light" and the "fourth colored light" overlap each other.

By projecting the projection image PI by the projecting method described above, the S/N ratio of the imaging device 12 is improved by making the brightness of the overlapping area DR twice or more as compared with the case where the measurement pattern is projected by one projecting apparatus 10. As a result, the projecting apparatus 10A according to the present embodiment can prevent the error of the measured value calculated by the image analyzer 133. In addition, in each measurement pattern, since the gradation of any of the R component, the G component, and the B component is not zero, it is possible to reduce the error of the measured value using the imaging device 12.

In a projecting method for measurement patterns from a plurality of projecting apparatuses of the related art, for example, one projecting apparatus projects colored light having a non-zero gradation as a measurement pattern, and the other projecting apparatuses project a black measurement pattern having the gradation of zero. In this case, the brightness of the overlapping area DR is half or less that of the present embodiment. Meanwhile, in the projecting system 1 according to the present embodiment, in order to set the S/N ratio of the imaging device 12 to a good state, all the projecting apparatuses 10 simultaneously project colored light of the same color as a measurement pattern. As a result, the measurement pattern becomes twice or more brighter than the projecting method of the related art in which the colored light is projected as the measurement pattern from only one projecting apparatus.

In the projecting method for measurement patterns from a plurality of projecting apparatuses, as another example, it is conceivable to calculate a first measured value by projecting colored light as a measurement pattern from only one projecting apparatus and capturing an image of the projected measurement pattern, and then calculate a second measured value by projecting colored light as a measurement pattern from only another projecting apparatus and capturing an image of the projected measurement pattern. In this case, the first measured value and the second measured value are added up, but due to the error of the first measured value and the error of the second measured value, the error is doubled as a result of adding up the first measured value and the second measured value. Specifically, since the S/N ratio is deteriorated by measuring light having half the brightness, a standard deviation of the error becomes $\sqrt{2}$ times, and adding together two measured values results in the two errors being added together, which results in the standard deviation of the error becoming $\sqrt{2}$ times. As a result, the final standard deviation of the error is twice the product of $\sqrt{2}$ times and $\sqrt{2}$ times. As a result, the noise in the S/N ratio is doubled. Meanwhile, in the present embodiment, since the measurement is performed only once, the noise in the S/N ratio becomes small.

In the above description, as an example, the effect in the case where the liquid crystal panel provided in the projector 11 includes three panels of the panel corresponding to the R component, the panel corresponding to the G component, and the panel corresponding to the B component has been described. However, the same effect can be obtained when the liquid crystal panel includes only one panel. This is because the S/N ratio is improved as the light incident on the imaging device 12 as an image sensor is brighter.

In the present embodiment, the measurement pattern projected by the projector 11 has been described above.

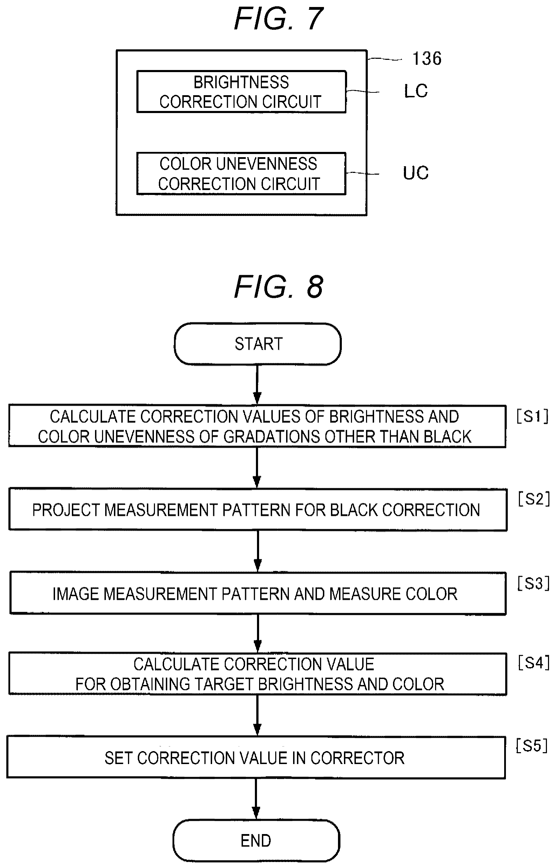

A specific example of a calculation method for the correction value by the correction value calculator 134 will be described later in the description of the operation of the present embodiment with reference to FIGS. 8 to 21.

In FIG. 2, the image acquisition unit 135 acquires an image to be projected from the image supply apparatus 20.

The corrector 136 corrects the image acquired by the image acquisition unit 135 using the correction value calculated by the correction value calculator 134.

FIG. 7 is a functional block diagram of the corrector 136. The corrector 136 includes a brightness correction circuit LC and a color unevenness correction circuit UC.

The brightness correction circuit LC corrects the brightness of the image acquired by the image acquisition unit 135 using the correction value calculated by the correction value calculator 134. The correction includes the correction of "black floating" described above.

The color unevenness correction circuit UC corrects the color unevenness of the image acquired by the image acquisition unit 135 using the correction value calculated by the correction value calculator 134.

In FIG. 2, the projection controller 131 causes the projector 11 to project the image corrected by the corrector 136 as the projection image PI onto the projection surface SC.

The communication controller 137 causes the communication device 15 to transmit and receive various information to and from an external device. The various information include the correction values transmitted from the projecting apparatus 10A to each of the projecting apparatus 10B and the projecting apparatus 10C.

1-2: Operation in First Embodiment

FIG. 8 is a flowchart illustrating an operation example of the projecting apparatus 10A according to the first embodiment.

In step S1, the projecting apparatus 10A calculates a correction value of the brightness and a correction value of the color unevenness for gradations other than black. Further, the projecting apparatus 10A uses the correction values to adjust the brightness and the color of the projection images PI from the projecting apparatuses 10A to 10C to be uniform among the projecting apparatuses 10.

The "black" here is, for example, a color included in the first gradation width including the gradation 0 when the gradation width from the gradation 0 which is the minimum gradation value to the gradation 1023 which is the maximum gradation value is divided into N parts. Here, N is an integer of three or more. Hereinafter, for convenience of description, N = 8 may be used.

The correction of the brightness described above is a correction for reducing the difference in brightness between the overlapping area DR and the non-overlapping area NR for the gradations other than black. The method used for correcting the color unevenness and the brightness may be a method of the related art. As an example, the method may be a method of correcting the brightness and the color unevenness by setting one of areas RL1 to RL5 in FIG. 1 as a target area, and comparing an imaging value indicated by an imaging value obtained by imaging the target area with an imaging value obtained by imaging another area RL.

At this time, it is assumed that adjustment points when the processing device 13 functions as the color unevenness correction circuit UC to correct the projection image PI are lattice points LP of 11 rows × 21 columns in the projection image PI as an example. The number of gradations is based on a boundary gradation obtained by dividing the gradation width from the gradation 0 to the gradation 1023 into eight equal parts.

However, in the method of the related art, since the color unevenness of black near the gradation 0 cannot be corrected, the correction value at the gradation 0 is not calculated.

In the process of step S1, the processing device 13 determines whether each of the lattice points LP used as the color unevenness correction circuit UC is provided in the overlapping area DR or the non-overlapping area NR.

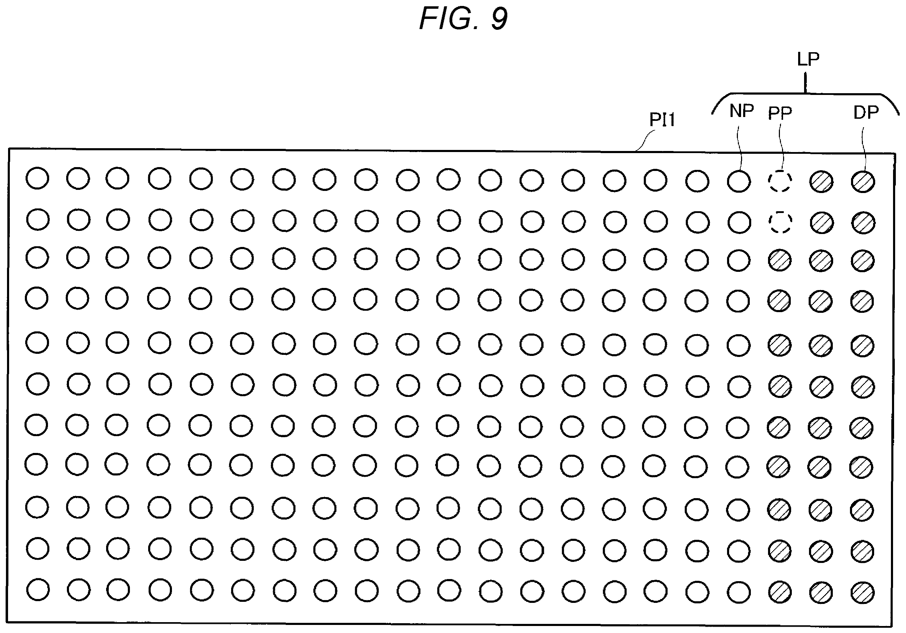

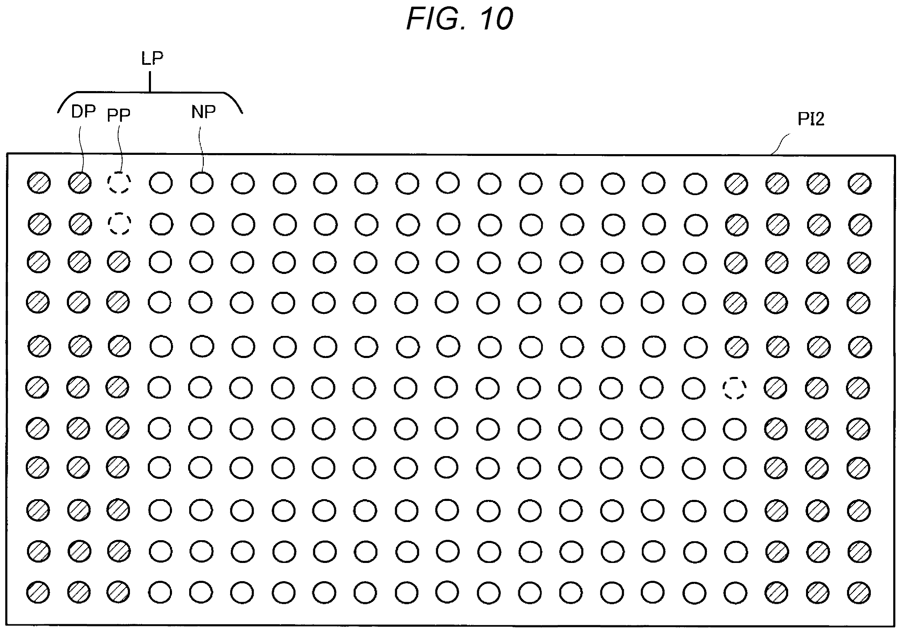

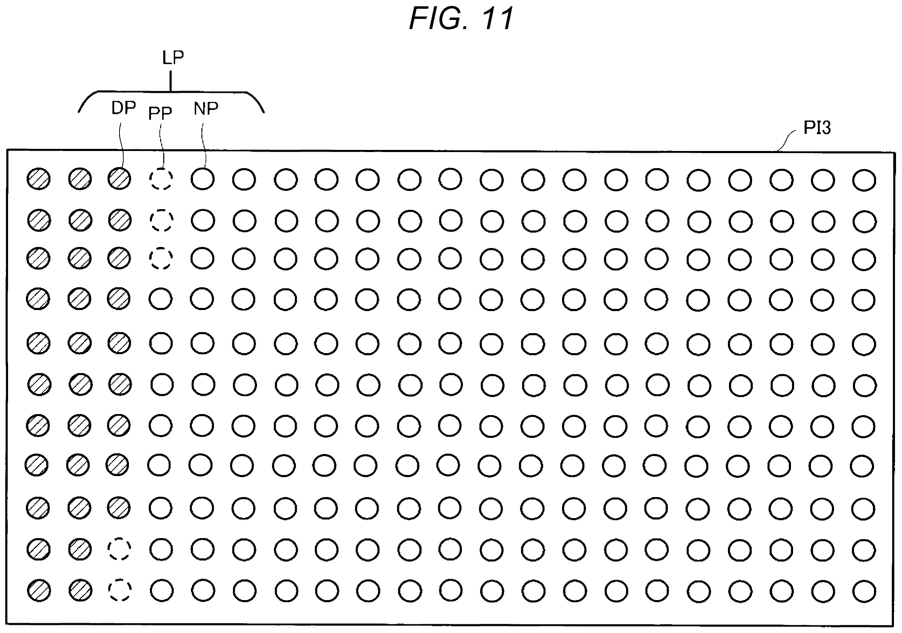

FIGS. 9 to 11 are diagrams illustrating examples of the lattice points LP. More specifically, FIG. 9 illustrates an example of the lattice points LP corresponding to the projection image PI1 projected from the projecting apparatus 10A. FIG. 10 illustrates an example of the lattice points LP corresponding to the projection image PI2 projected from the projecting apparatus 10B. FIG. 11 illustrates an example of the lattice points LP corresponding to the projection image PI3 projected from the projecting apparatus 10C.

In FIGS. 9 to 11, the lattice points LP include lattice points DP, lattice points NP, and lattice points PP. In these drawings, hatched circles indicate the lattice points DP provided in the overlapping area DR. White circles indicate the lattice points NP provided in the non-overlapping area NR. A circle with a dotted contour indicates a lattice point PP for which it is not possible to determine whether it is provided in the overlapping area DR or the non-overlapping area NR. There is a measured value calculated by the image analyzer 133 for each lattice point LP illustrated in FIGS. 9 to 11.

In step S2, the projecting apparatus 10A projects a measurement pattern for black correction. Specifically, the processing device 13 provided in the projecting apparatus 10A functions as the projection controller 131. The processing device 13 reads the measurement pattern from the storage device 14 and causes the projector 11 to sequentially project the measurement pattern onto the projection surface SC.

The measurement pattern is any of the measurement patterns 1 to 13. As described above, these measurement patterns are measurement patterns in which the gradation of one of the R component, the G component, and the B component is changed with reference to gray in which all of the R component, the G component, and the B component are at the gradation B.

In the following description, as an example, in the first measurement pattern used for correction of the black color unevenness in the overlapping area DR, the gradation A is a gradation 22, the gradation B is a gradation 34, and the gradation C is a gradation 60. The "first measurement pattern" corresponds to the "first gradation data" described above.

Further, in the second measurement pattern used for the correction of "black floating" in the non-overlapping area NR and the correction of the black color unevenness, it is assumed that the gradation B' = the gradation B is a gradation 34, the gradation C' = the gradation C is a gradation 60, and the gradation D is a gradation 95. The second measurement pattern corresponds to the "second gradation data" described above.

Further, in the projecting apparatus 10A, since the correction value when the contrast ratio is prioritized is also calculated at the same time, the processing device 13 functions as the projection controller 131 to also cause the projector 11 to project the measurement pattern in which at least one color component of the R component, the G component, and the B component is the gradation 0.

In step S3, the processing device 13 provided in the projecting apparatus 10A functions as the imaging controller 132. The processing device 13 causes the imaging device 12 to capture an image of each measurement pattern projected onto the projection surface SC. The processing device 13 functions as the image analyzer 133. The processing device 13 analyzes the measurement pattern imaged by the imaging device 12 and calculates a measured value indicating the color of the measurement pattern in the captured image.

In step S4, the processing device 13 provided in the projecting apparatus 10A functions as the correction value calculator 134. The processing device 13 calculates the correction values to be set in respective one of the brightness correction circuit LC and the color unevenness correction circuit UC so that the brightness of the black after the correction becomes a target brightness when viewed from the imaging device 12, the black color unevenness after the correction is prevented, and the chromaticity becomes uniform when viewed from the imaging device 12.

First, the processing device 13 obtains the correspondence relationship between the gradation values $(r, g, b)$ ($0 \leq r, g, b \leq 95$) of the colored light as the measurement pattern projected by the projector 11 and the measured values $(R, G, B)$ representing the color of the colored light in the captured image calculated by analyzing the colored light as the measurement pattern captured by the imaging device 12 at each point of the lattice point LP by the interpolation operation.

As described above, the gradation values of the R component, the G component, and the B component of the colored light projected by the projector 11 are, for example, five gradations from the gradation 0 to the gradation 95.

Here, the gradation values $(r, g, b)$ are an example of "gradation data".

In gradation values $(r, g, b)$ of the first measurement pattern, r is the example of the "first gradation value". g is the example of the "second gradation value". b is the example of the "third gradation value".

In gradation values $(r, g, b)$ of the second measurement pattern, r is an example of a "fourth gradation value". g is an example of a "fifth gradation value". b is an example of a "sixth gradation value".

Further, the "measured values $(R, G, B)$" are an example of "measurement data". The "measured values $(R, G, B)$" corresponding to the first measurement pattern are an example of "first measurement data". The "measured values $(R, G, B)$" corresponding to the second measurement pattern are an example of "second measurement data".

Among the measured values $(R, G, B)$ corresponding to the first measurement data, the value of the R component is an example of a "first brightness value" indicating brightness of reflected light of colored light corresponding to the "first color component" having the "first gradation value". Among the measured values $(R, G, B)$ corresponding to the first measurement data, the value of the G component is an example of a "second brightness value" indicating brightness of reflected light of colored light corresponding to the "second color component" having the "second gradation value". Among the measured values (R, G, B) corresponding to the first measurement data, the value of the B component is an example of a "third brightness value" indicating brightness of reflected light of colored light corresponding to the "third color component" having the "third gradation value".

Among the measured values (R, G, B) corresponding to the second measurement data, the value of the R component is an example of a "fourth brightness value" indicating brightness of reflected light of colored light corresponding to the "first color component" having the "fourth gradation value". Among the measured values (R, G, B) corresponding to the second measurement data, the value of the G component is an example of a "fifth brightness value" indicating brightness of reflected light of the colored light corresponding to the "second color component" having the "fifth gradation value". Among the measured values (R, G, B) corresponding to the second measurement data, the value of the B component is an example of a "sixth brightness value" indicating brightness of reflected light of colored light corresponding to the "third color component" having the "sixth gradation value".

Hereinafter, in order to make the notation easy to understand, the R component, the G component, and the B component of the measured values (R, G, B) representing the color of the colored light in the captured image calculated by the processing device 13 when the colored light of the gradations (r, g, b) is projected as the measurement pattern by the projector 11 are denoted by $R_{(r, g, b)}$, $G_{(r, g, b)}$, and $B_{(r, g, b)}$, respectively.

When the R component, the G component, and the B component of the measured value indicating the color of the colored light in the captured image are collectively expressed, they are denoted as $(R, G, B)_{(r, g, b)} = (R_{(r, g, b)}, G_{(r, g, b)}, B_{(r, g, b)})$.

Among the gradations (r, g, b) of the colored light as the measurement patterns, the measured values of the five measurement patterns in which only the R component is changed are expressed by the following Formulas 1 to 5.

$$(R, G, B)_{(0, 34, 34)} = \left( R_{(0, 34, 34)}, G_{(0, 34, 34)}, B_{(0, 34, 34)} \right) \quad [1]$$

$$(R, G, B)_{(22, 34, 34)} = \left( R_{(22, 34, 34)}, G_{(22, 34, 34)}, B_{(22, 34, 34)} \right) \quad [2]$$

$$(R, G, B)_{(34, 34, 34)} = \left( R_{(34, 34, 34)}, G_{(34, 34, 34)}, B_{(34, 34, 34)} \right) \quad [3]$$

$$(R, G, B)_{(60, 34, 34)} = \left( R_{(60, 34, 34)}, G_{(60, 34, 34)}, B_{(60, 34, 34)} \right) \quad [4]$$

$$(R, G, B)_{(95, 34, 34)} = \left( R_{(95, 34, 34)}, G_{(95, 34, 34)}, B_{(95, 34, 34)} \right) \quad [5]$$

The measured values of these five measurement patterns are all known. Therefore, the processing device 13 can perform curve interpolation between the measured values of the R component among the measured values (R, G, B). The same applies to the G component and the B component. As the curve interpolation method, a known method can be used. For example, the processing device 13 may perform curve interpolation using a spline curve. Alternatively, the processing device 13 may perform parabolic interpolation using three points out of five points corresponding to five measured values. Alternatively, the processing device 13 may execute cubic curve interpolation (the cubic interpolation) using four points out of five points corresponding to the five measured values.

In Formulas 1 to 5, r = 22 is an example of a "first value". r = 34 is an example of a "second value". r = 60 is an example of a "third value". (R, G, B)(22, 34, 34) is an example of a "first measured value". (R, G, B)(34, 34, 34) is an example of a "second measured value". (R, G, B)(60, 34, 34) is an example of a "third measured value".

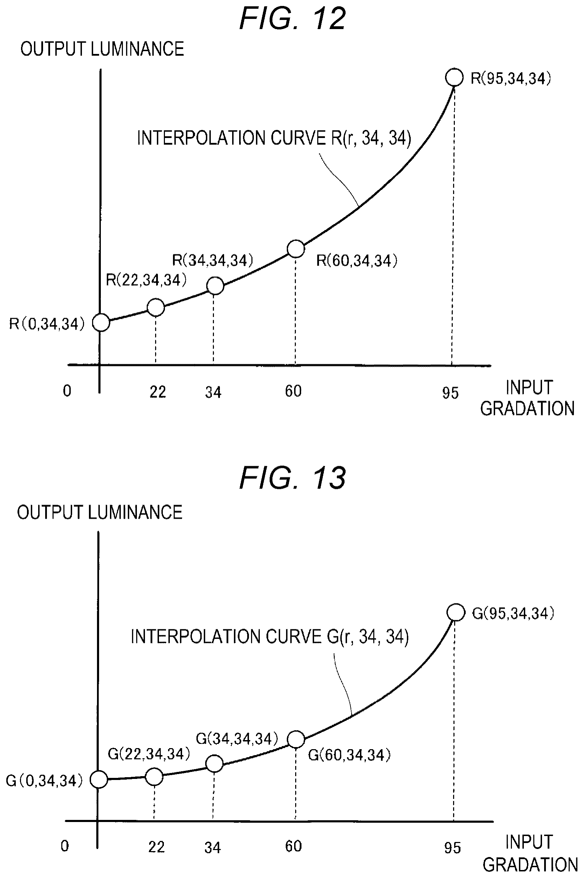

FIG. 12 is a diagram illustrating an example of an interpolation curve R(r, 34, 34) for interpolating the measured value of the R component among the measured values (R, G, B) calculated by the processing device 13 when only r, which is the R component, is changed among the gradations (r, g, b) of the colored light as the measurement pattern. The interpolation curve R(r, 34, 34) is an example of a "curve indicating a first characteristic".

FIG. 13 is a diagram illustrating an example of an interpolation curve G(r, 34, 34) for interpolating the measured value of the G component among the measured values (R, G, B) calculated by the processing device 13 when only the r, which is the R component, is changed among the gradations (r, g, b) of the colored light as the measurement pattern.

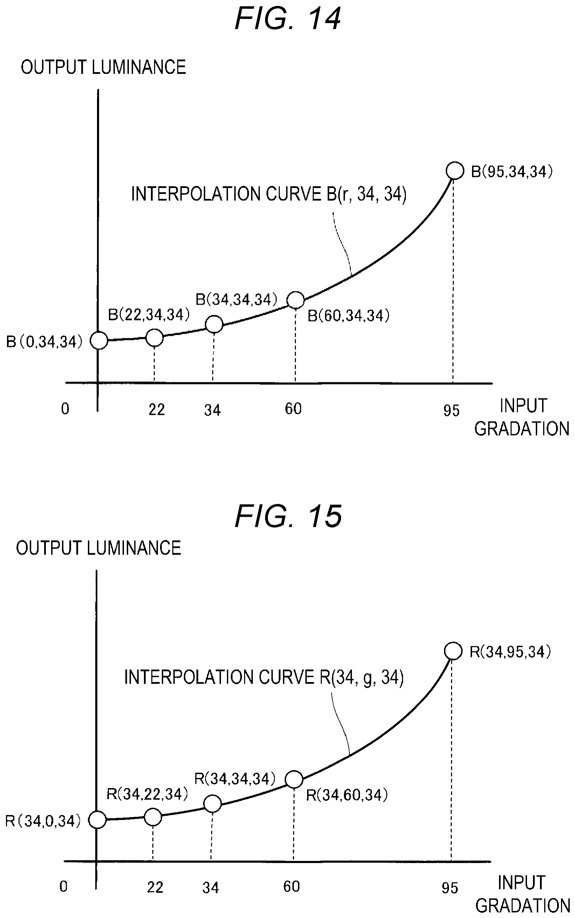

FIG. 14 is a diagram illustrating an example of an interpolation curve B(r, 34, 34) for interpolating the measured value of the B component among the measured values (R, G, B) calculated by the processing device 13 when only the R, which is the R component, is changed among the gradations (r, g, b) of the colored light as the measurement pattern.

By using the three interpolation curves R(r, 34, 34), G(r, 34, 34), and B(r, 34, 34), the processing device 13 can estimate the measured values $(R, G, B)_{(r,g,b)}=(R_{(r,g,b)}, G_{(r,g,b)}, B_{(r,g,b)})$ when the colored light having the R component with any gradation r ($0 \le r \le 95$) is projected onto the projection surface SC.

FIG. 15 is a diagram illustrating an example of an interpolation curve R(34, g, 34) for interpolating the measured value of the R component among the measured values (R, G, B) calculated by the processing device 13 when only g, which is the G component, is changed among the gradations (r, g, b) of the colored light as the measurement pattern.

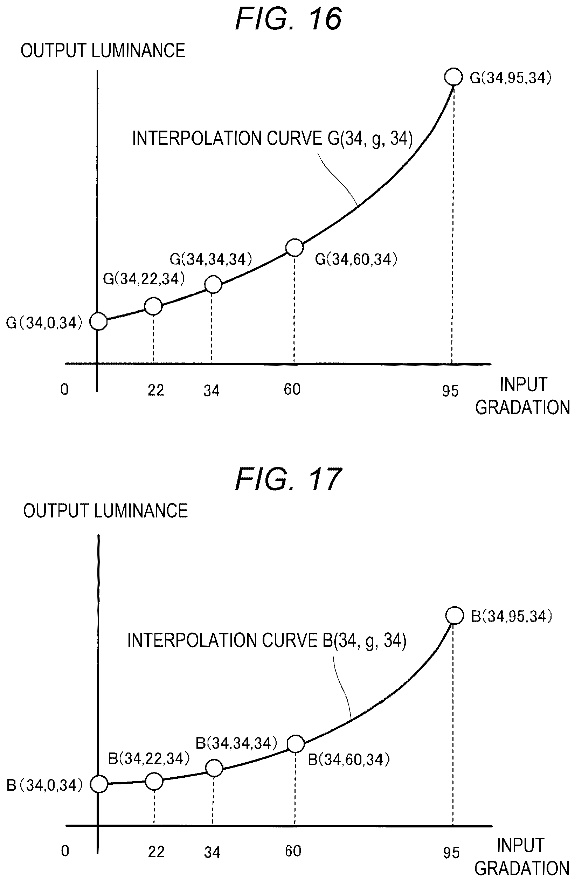

FIG. 16 is a diagram illustrating an example of an interpolation curve G(34, g, 34) for interpolating the measured value of the G component among the measured values (R, G, B) calculated by the processing device 13 when only the g, which is the G component, is changed among the gradations (r, g, b) of the colored light as the measurement pattern.

FIG. 17 is a diagram illustrating an example of an interpolation curve B(34, g, 34) for interpolating the measured value of the B component among the measured values (R, G, B) calculated by the processing device 13 when only the g, which is the G component, is changed among the gradations (r, g, b) of the colored light as the measurement pattern.

By using the three interpolation curves R(34, g, 34), G(34, g, 34), and B(34, g, 34), the processing device 13 can estimate the measured values $(R, G, B)_{(r,g,b)}=(R_{(r,g,b)}, G_{(r,g,b)}, B_{(r,g,b)})$ when the colored light having the G component with any gradation g ($0 \le g \le 95$) is projected onto the projection surface SC.

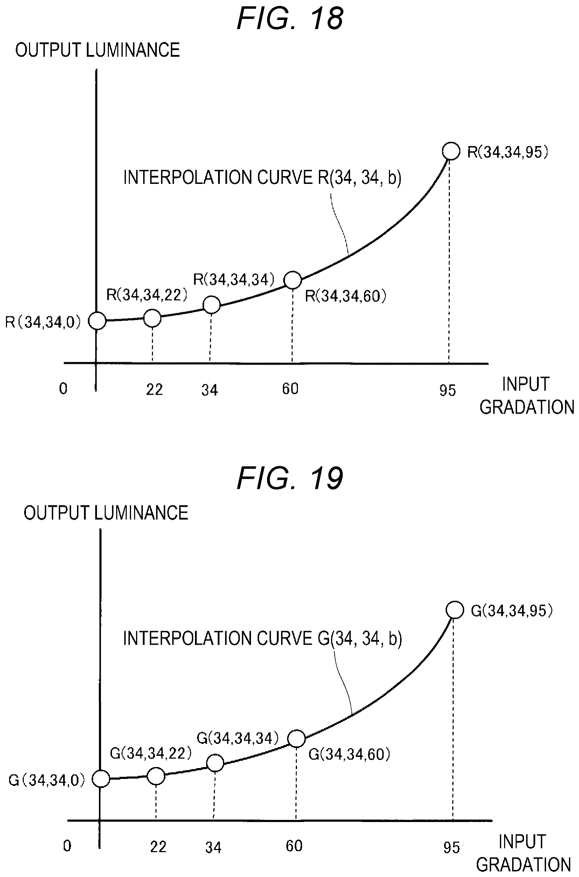

FIG. 18 is a diagram illustrating an example of an interpolation curve R(34, 34, b) for interpolating the measured value of the R component among the measured values (R, G, B) calculated by the processing device 13 when only b, which is the B component, is changed among the gradations (r, g, b) of the colored light as the measurement pattern.

FIG. 19 is a diagram illustrating an example of an interpolation curve G(34, 34, b) for interpolating the measured value of the G component among the measured values (R, G, B) calculated by the processing device 13 when only the b, which is the B component, is changed among the gradations (r, g, b) of the colored light as the measurement pattern.

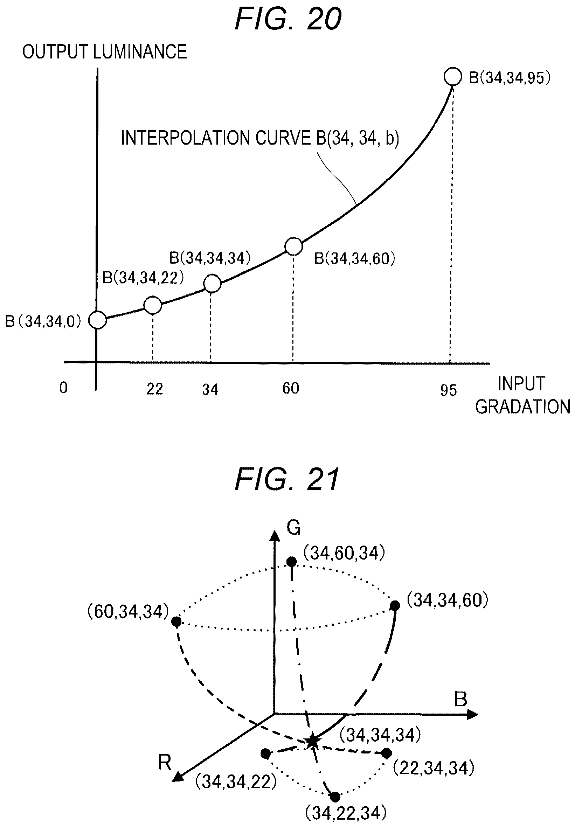

FIG. 20 is a diagram illustrating an example of an interpolation curve B(34, 34, b) for interpolating the measured value of the B component among the measured values (R, G, B) calculated by the processing device 13 when only the b, which is the B component, is changed among the gradations (r, g, b) of the colored light as the measurement pattern.

By using the three interpolation curves R(34, 34, b), G(34, 34, b), and B(34, 34, b), the processing device 13 can estimate the measured values $(R, G, B)_{(r,g,b)}=(R_{(r,g,b)}, G_{(r,g,b)}, B_{(r,g,b)})$ when the colored light having the B component with any gradation b ($0 \le b \le 95$) is projected onto the projection surface SC.

As a result, it is possible to estimate the measured value $(R, G, B)_{(r,g,b)}=(R_{(r,g,b)}, G_{(r,g,b)}, B_{(r,g,b)})$ when only one color component of the gradation values (r, g, b) of the colored light projected from the projector 11 is changed and the other color components are fixed to the gradation 34 as illustrated in the following Formulas 6 to 8 using the functions of the interpolation curve R(r, 34, 34), the interpolation curve G(r, 34, 34), the interpolation curve B(r, 34, 34), the interpolation curve R(34, g, 34), the interpolation curve G(34, g, 34), the interpolation curve B(34, g, 34), the interpolation curve R(34, 34, b), the interpolation curve G(34, 34, b), and the interpolation curve B(34, 34, b).

$$(R, G, B)_{(r,34,34)} = \left( R_{(r,34,34)}, G_{(r,34,34)}, B_{(r,34,34)} \right) \quad [\quad 6]$$

$$(R, G, B)_{(34,g,34)} = \left( R_{(34,g,34)}, G_{(34,g,34)}, B_{(34,g,34)} \right) \quad [\quad 7]$$

$$(R, G, B)_{(34,34,b)} = \left( R_{(34,34,b)}, G_{(34,34,b)}, B_{(34,34,b)} \right) \quad [\quad 8]$$

In Formulas 6 to 8 described above, among the gradation values (r, g, b) of the colored light projected from the projector 11, one component of r of the R component, g of the G component, and b of the B component is freely changed, and the other two components are fixed to the gradation 34. Therefore, by applying the property of the additive color mixture to Formulas 6 to 8, the processing device 13 can estimate the measured value $(R, G, B)_{(r,g,b)}=(R_{(r,g,b)}, G_{(r,g,b)}, B_{(r,g,b)})$ when all the components of r of the R component, g of the G component, and b of the B component are freely changed among the gradation values (r, g, b) ($0 \le r, g, b \le 95$) of the colored light by using Formula 9 below.

$$(R, G, B)_{(r, g, b)}$$
$$= (R, G, B)_{(r, 34, 34)} + (R, G, B)_{(34, g, 34)} + (R, G, B)_{(34, 34, b)}$$
$$- 2 \times (R, G, B)_{(34, 34, 34)} \quad [\quad 9\quad]$$

In Formula 9, an origin of the additive color mixture is not $(r, g, b) = (0, 0, 0)$ but $(r, g, b) = (34, 34, 34)$. When Formula 9 is expressed for each component, the following Formulas 10 to 12 are obtained. FIG. 21 is a graph illustrating Formulas 10 to 12 in a three-dimensional space with the R component, the G component, and the B component as three axes.

$$R_{(r, g, b)} = R_{(r, 34, 34)} + R_{(34, g, 34)} + R_{(34, 34, b)} - 2 \times R_{(34, 34, 34)} \quad [\quad 10\quad]$$

$$G_{(r, g, b)} = G_{(r, 34, 34)} + G_{(34, g, 34)} + G_{(34, 34, b)} - 2 \times G_{(34, 34, 34)} \quad [\quad 11\quad]$$

$$B_{(r, g, b)} = B_{(r, 34, 34)} + B_{(34, g, 34)} + B_{(34, 34, b)} - 2 \times B_{(34, 34, 34)} \quad [\quad 12\quad]$$

The processing device 13 can estimate the measured values $(R, G, B)_{(r, g, b)} = (R_{(r, g, b)}, G_{(r, g, b)}, B_{(r, g, b)})$ calculated by the image analyzer 133 when the projector 11 projects the colored light of any correction value, that is any output gradation $(r, g, b)$ output from the corrector 136 to the projector 11 onto the projection surface SC by using Formulas 10 to 12 described above.

The processing device 13 calculates the output gradations $(r, g, b)$ after correction corresponding to each lattice point LP as a correction value (adjustment value) so that the brightness of the black after correction becomes a target brightness when viewed from the imaging device 12, the black color unevenness after correction is prevented, and the chromaticity becomes uniform when viewed from the imaging device 12.

Specifically, the processing device 13 can calculate what color the reflected light of the colored light projected onto the projection surface SC from the projector 11 is, when what output gradation $(r, g, b)$ is output from the corrector 136 to the projector 11, for each lattice point LP, when viewed from the imaging device 12. The processing device 13 can also calculate back the calculation. As a result, the processing device 13 calculates the output gradations $(r, g, b)$ after the correction as a correction value (adjustment value) in accordance with the brightness of black after the correction and the black color unevenness after the correction.

The projecting apparatus 10A, the projecting apparatus 10B, and the projecting apparatus 10C have the same $\gamma$ characteristic. As a result, when the processing device 13 provided in the projecting apparatus 10A calculates the output gradations $(r, g, b)$ after the correction corresponding to each lattice point LP in the projection image PI1, it is possible to apply the same output gradations $(r, g, b)$ after the correction as the lattice point LP in the projection image PI1 to the lattice point LP in the projection image PI2 located near the lattice point LP in the projection image PI1 in the overlapping area DR of the projection image PI1 and the projection image PI2.

In step S5 in FIG. 8, the processing device 13 provided in the projecting apparatus 10A functions as the correction value calculator 134. The processing device 13 sets the correction values calculated in step S4 in the brightness correction circuit LC and the color unevenness correction circuit UC.

In FIG. 2, the image acquired by the processing device 13 functioning as the image acquisition unit 135 is corrected by the brightness correction circuit LC and the color unevenness correction circuit UC in which the correction values are set. As a result, the projection image PI in which the black color unevenness and the "black floating" are corrected is projected from the projector 11 onto the projection surface SC.

2: Modifications

The embodiment described above can be modified in various manners. Specific aspects of the modifications will be presented below by way of example. The aspects presented below by way of example and the aspects present in the embodiment described above can be combined with each other as appropriate to the extent that the aspects do not contradict each other. Note that, in the modifications exemplified below, elements having effects and functions equivalent to those in the embodiments are denoted by the reference numerals and signs referred to in the above explanation and detailed description of the elements is omitted as appropriate.

2-1: Modification 1

In the embodiment described above, the projecting system 1 includes the projecting apparatus 10A, the projecting apparatus 10B, and the projecting apparatus 10C. Then, the projection image PI1 projected from the projecting apparatus 10A, the projection image PI2 projected from the projecting apparatus 10B, and the projection image PI3 projected from the projecting apparatus 10C are displayed in a tiled manner while partial areas thereof are overlapped each other, thereby forming the projection image PI_A. The correction of the black color unevenness and the correction of the "black floating" in the embodiment described above are the correction in the projection image PI_A.

However, the correction of the black color unevenness can also be realized when only one projecting apparatus 10A is provided in the projecting system 1.

3: Summary of Present Disclosure

A summary of the present disclosure is appended below.

(Appendix 1) A control method for a projecting apparatus including: acquiring a plurality of pieces of measurement data based on an output from a sensor that measures reflected light of a plurality of types of colored light, which correspond one-to-one to a plurality of pieces of gradation data, reflected by a projection surface when the plurality of types of colored light are projected from a projecting apparatus onto the projection surface based on the plurality of pieces of gradation data; and calculating correction data for correcting a color of an image displayed on the projection surface based on the plurality of pieces of gradation data and the plurality of pieces of measurement data, in which the plurality of pieces of gradation data include a plurality of first gradation values indicating at least one gradation for a first color component, a plurality of second gradation values indicating at least one gradation for a second color component, and a plurality of third gradation values indicating at least one gradation for a third color component, the plurality of pieces of measurement data include a first brightness value indicating brightness of reflected light of colored light corresponding to the first color component having the first gradation value, a second brightness value indicating brightness of reflected light of colored light corresponding to the second color component having the second gradation value, and a third brightness value indicating brightness of reflected light of colored light corresponding to the third color component having the third gradation value, and a difference value between a lowest first gradation value and a second lowest first gradation value among the plurality of first gradation values included in the plurality of pieces of gradation data is smaller than a difference value between a highest first gradation value and a second highest first gradation value among the plurality of first gradation values input.

With the configuration described above, the control method of Appendix 1 can correct a low-gradation color close to black using the measurement pattern selected according to the gamma characteristic with respect to the first gradation value. As a result, an accuracy of correction of the low-gradation color close to black is improved.

(Appendix 2) The control method for a projecting apparatus according to Appendix 1, in which a difference value between a lowest second gradation value and a second lowest second gradation value among the plurality of second gradation values included in the plurality of pieces of gradation data is smaller than a difference value between a highest second gradation value and a second highest second gradation value among the plurality of second gradation values, and a difference value between a lowest third gradation value and a second lowest third gradation value among the plurality of third gradation values included in the plurality of pieces of gradation data is smaller than a difference value between a highest third gradation value and a second highest third gradation value among the plurality of third gradation values.

With the configuration described above, the control method of Appendix 2 can correct the low-gradation color close to black by using the measurement pattern selected according to the gamma characteristic with respect to the second gradation value and the third gradation value. As a result, an accuracy of correction of the low-gradation color close to black is improved.

(Appendix 3) The control method for a projecting apparatus according to Appendix 1, in which the plurality of first gradation values included in the plurality of pieces of gradation data include a first value, a second value larger than the first value, and a third value larger than the second value, a plurality of the first brightness values included in the plurality of pieces of measurement data include a first measured value, a second measured value larger than the first measured value, and a third measured value larger than the second measured value, a first set of the first value and the first measured value, a second set of the second value and the second measured value, and a third set of the third value and the third measured value satisfy a curve indicating a first characteristic defining the plurality of first brightness values for the plurality of first gradation values, and the calculating of the correction data includes specifying a function indicating the curve based on the first set, the second set, and the third set, and specifying a correction value for correcting the color of the image based on the function.

With the configuration described above, the control method of Appendix 3 can perform the correction even when the first gradation value has a value between the discrete values by interpolating between the discrete values based on the plurality of discrete first gradation values and the plurality of discrete first brightness values indicated by the measurement data corresponding to the first gradation values.

(Appendix 4) The control method for a projecting apparatus according to Appendix 3, in which the gradation values of the first color component are divided into N sections from a first gradation value indicating a minimum gradation to a first gradation value indicating a maximum gradation, the first value, the second value, and the third value belong to a section to which the first gradation value indicating the minimum gradation belongs among the N sections, and N is an integer of three or more.

With the configuration described above, the control method of Appendix 4 can finely correct the low-gradation color close to black as compared with a relatively high-gradation color.

(Appendix 5) The control method for a projecting apparatus according to Appendix 1, in which the plurality of pieces of gradation data include gradation data in which the first gradation value, the second gradation value, and the third gradation value are equal to each other.

With the configuration described above, the control method of Appendix 5 can use a gray pattern as the measurement pattern.

(Appendix 6) The control method for a projecting apparatus according to Appendix 1, the projecting apparatus being a first projecting apparatus, the plurality of pieces of gradation data being a plurality of pieces of first gradation data, the plurality of pieces of measurement data being a plurality of pieces of first measurement data, the plurality of types of colored light being a plurality of types of first colored light, the plurality of types of first colored light and a plurality of types of second colored light, which correspond one-to-one to the plurality of pieces of first gradation data, overlapping each other in a first area of the projection surface by a second projecting apparatus projecting the plurality of types of second colored light onto the projection surface, based on the plurality of pieces of first gradation data, the correction method further including: acquiring, based on a plurality of pieces of second gradation data, a plurality of pieces of second measurement data based on an output from the sensor that measures reflected light of a plurality of pieces of types of third colored light, which correspond one-to-one to the plurality of pieces of second gradation data, reflected by the projection surface when the plurality of types of third colored light are projected from the first projecting apparatus onto the projection surface; acquiring, based on the plurality of pieces of second gradation data, a plurality of pieces of second measurement data based on an output of the sensor that measures reflected light of a plurality of pieces of types of fourth colored light, which correspond one-to-one to the plurality of pieces of second gradation data, reflected by the projection surface when the plurality of types of fourth colored light are projected from the second projecting apparatus onto the projection surface, the plurality of types of third colored light and the plurality of types of fourth colored light overlapping each other in the first area of the projection surface; and calculating the correction data for correcting the color of the image displayed on the projection surface based on the plurality of pieces of second gradation data and the plurality of pieces of second measurement data, in addition to the plurality of pieces of first gradation data and the plurality of pieces of first measurement data, in which each of the plurality of pieces of second gradation data includes a plurality of fourth gradation values indicating at least one gradation for the first color component, a plurality of fifth gradation values indicating at least one gradation for the second color component, and a plurality of sixth gradation values indicating at least one gradation for the third color component, each of the plurality of pieces of second measurement data includes a fourth brightness value indicating brightness of reflected light of colored light corresponding to the first color component having the fourth gradation value, a fifth brightness value indicating brightness of reflected light of colored light corresponding to the second color component having the fifth gradation value, and a sixth brightness value indicating brightness of reflected light of colored light corresponding to the third color component having the sixth gradation value, and a difference value between a lowest fourth gradation value and a second lowest fourth gradation value among the plurality of fourth gradation values included in the plurality of pieces of second gradation data is smaller than a difference value between the highest first gradation value and the second highest first gradation value among the plurality of first gradation values.

With the configuration described above, the control method of Appendix 6 can simultaneously correct the colors of the plurality of projection images displayed in a tiled manner.

(Appendix 7) The control method for a projecting apparatus according to Appendix 6, in which only the plurality of types of first colored light are projected on a second area of the projection surface, and the correction of the color of the image is to reduce color unevenness in the first area and to correct brightness of the second area to be equal to brightness of the first area.

With the configuration described above, the control method of Appendix 7 can simultaneously correct black color unevenness and "black floating" of a plurality of projection images displayed in a tiled manner.

(Appendix 8) The control method for a projecting apparatus according to Appendix 6, in which the plurality of first gradation values included in the plurality of pieces of first gradation data include a first value, a second value larger than the first value, and a third value larger than the second value, the plurality of fourth gradation values included in the plurality of pieces of second gradation data include a fourth value, a fifth value larger than the fourth value, and a sixth value larger than the fifth value, the second value and the fourth value are equal to each other, and the third value and the fifth value are equal to each other.

With the configuration described above, the control method of Appendix 8 can use a measurement pattern having a common gradation in the overlapping area DR and the non-overlapping area NR. As a result, a processing load is reduced. Furthermore, the control method according to the present embodiment can improve the S/N ratio in the imaging device 12.

(Appendix 9) The control method for a projecting apparatus according to Appendix 6, in which projecting the plurality of types of first colored light from the first projecting apparatus and projecting the plurality of types of second colored light from the second projecting apparatus are synchronized with each other.

With the configuration described above, the control method of Appendix 9 can improve the S/N ratio in the imaging device 12.

(Appendix 10) A non-transitory computer-readable storage medium storing a program that controls a projecting apparatus, the program including causing the projecting apparatus to execute acquiring a plurality of pieces of measurement data based on an output from a sensor that measures reflected light of a plurality of types of colored light, which correspond one-to-one to a plurality of pieces of gradation data, reflected by a projection surface when the plurality of types of colored light are projected from a projecting apparatus onto the projection surface based on the plurality of pieces of gradation data, and calculating correction data for correcting a color of an image displayed on the projection surface based on the plurality of pieces of gradation data and the plurality of pieces of measurement data, in which the plurality of pieces of gradation data include a plurality of first gradation values indicating at least one gradation for a first color component, a plurality of second gradation values indicating at least one gradation for a second color component, and a plurality of third gradation values indicating at least one gradation for a third color component, the plurality of pieces of measurement data include a first brightness value indicating brightness of reflected light of colored light corresponding to the first color component having the first gradation value, a second brightness value indicating brightness of reflected light of colored light corresponding to the second color component having the second gradation value, and a third brightness value indicating brightness of reflected light of colored light corresponding to the third color component having the third gradation value, and a difference value between a lowest first gradation value and a second lowest first gradation value among the plurality of first gradation values included in the plurality of pieces of gradation data is smaller than a difference value between a highest first gradation value and a second highest first gradation value among the plurality of first gradation values input.

In the non-transitory computer-readable storage medium storing a program of Appendix 10 with the configuration described above, it is possible to correct a low-gradation color close to black using a measurement pattern selected according to the gamma characteristic with respect to the first gradation value. As a result, the accuracy of correction of the low-gradation color close to black is improved.

Note that, step(s) or operation(s) other than those necessary to solve the at least one of problems in the present application may be omitted from each flowchart.

Note that, the sequence of steps or operations within each flowchart may be changed, as long as at least one of the problems in the present application can be solved or technical consistency is maintained.

**Claims**

1. A control method for a projecting apparatus comprising:

    acquiring a plurality of pieces of measurement data based on an output from a sensor that measures reflected light of a plurality of types of colored light, which correspond one-to-one to a plurality of pieces of gradation data, reflected by a projection surface when the plurality of types of colored light are projected from a projecting apparatus onto the projection surface based on the plurality of pieces of gradation data; and
    calculating correction data for correcting a color of an image displayed on the projection surface based on the plurality of pieces of gradation data and the plurality of pieces of measurement data, wherein
    the plurality of pieces of gradation data include a plurality of first gradation values indicating at least one gradation for a first color component, a plurality of second gradation values indicating at least one gradation for a second color component, and a plurality of third gradation values indicating at least one gradation for a third color component,
    the plurality of pieces of measurement data include a first brightness value indicating brightness of reflected light of colored light corresponding to the first color component having the first gradation value, a second brightness value indicating brightness of reflected light of colored light corresponding to the second color component having the second gradation value, and a third brightness value indicating brightness of reflected light of colored light corresponding to the third color component having the third gradation value, and
    a difference value between a lowest first gradation value and a second lowest first gradation value among the plurality of first gradation values included in the plurality of pieces of gradation data is smaller than a difference value between a highest first gradation value and a second highest first gradation value among the plurality of first gradation values input.

2. The control method for a projecting apparatus according to claim 1, wherein

a difference value between a lowest second gradation value and a second lowest second gradation value among the plurality of second gradation values included in the plurality of pieces of gradation data is smaller than a difference value between a highest second gradation value and a second highest second gradation value among the plurality of second gradation values, and
a difference value between a lowest third gradation value and a second lowest third gradation value among the plurality of third gradation values included in the plurality of pieces of gradation data is smaller than a difference value between a highest third gradation value and a second highest third gradation value among the plurality of third gradation values.

3. The control method for a projecting apparatus according to claim 1, wherein

the plurality of first gradation values included in the plurality of pieces of gradation data include a first value, a second value larger than the first value, and a third value larger than the second value,
a plurality of the first brightness values included in the plurality of pieces of measurement data include a first measured value, a second measured value larger than the first measured value, and a third measured value larger than the second measured value,
a first set of the first value and the first measured value, a second set of the second value and the second measured value, and a third set of the third value and the third measured value satisfy a curve indicating a first characteristic defining the plurality of first brightness values for the plurality of first gradation values, and
the calculating of the correction data includes

specifying a function indicating the curve based on the first set, the second set, and the third set, and
specifying a correction value for correcting the color of the image based on the function.

4. The control method for a projecting apparatus according to claim 3, wherein

the gradation values of the first color component are divided into N sections from a first gradation value indicating a minimum gradation to a first gradation value indicating a maximum gradation,
the first value, the second value, and the third value belong to a section to which the first gradation value indicating the minimum gradation belongs among the N sections, and
N is an integer of three or more.

5. The control method for a projecting apparatus according to claim 1, wherein
the plurality of pieces of gradation data include gradation data in which the first gradation value, the second gradation value, and the third gradation value are equal to each other.

6. The control method for a projecting apparatus according to claim 1,

the projecting apparatus being a first projecting apparatus,
the plurality of pieces of gradation data being a plurality of pieces of first gradation data,
the plurality of pieces of measurement data being a plurality of pieces of first measurement data,
the plurality of types of colored light being a plurality of types of first colored light, the plurality of types of first colored light and a plurality of types of second colored light, which correspond one-to-one to the plurality of pieces of first gradation data, overlapping each other in a first area of the projection surface by a second projecting apparatus projecting the plurality of types of second colored light onto the projection surface, based on the plurality of pieces of first gradation data,
the correction method further comprising:

acquiring, based on a plurality of pieces of second gradation data, a plurality of pieces of second measurement data based on an output from the sensor that measures reflected light of a plurality of pieces of types of third colored light, which correspond one-to-one to the plurality of pieces of second gradation data, reflected by the projection surface when the plurality of types of third colored light are projected from the first projecting apparatus onto the projection surface;
acquiring, based on the plurality of pieces of second gradation data, a plurality of pieces of second measurement data based on an output of the sensor that measures reflected light of a plurality of pieces of types of fourth colored light, which correspond one-to-one to the plurality of pieces of second gradation data, reflected by the projection surface when the plurality of types of fourth colored light are projected from the second projecting apparatus onto the projection surface,

the plurality of types of third colored light and the plurality of types of fourth colored light overlapping each other in the first area of the projection surface; and

calculating the correction data for correcting the color of the image displayed on the projection surface based on the plurality of pieces of second gradation data and the plurality of pieces of second measurement data, in addition to the plurality of pieces of first gradation data and the plurality of pieces of first measurement data, wherein

each of the plurality of pieces of second gradation data includes a plurality of fourth gradation values indicating at least one gradation for the first color component, a plurality of fifth gradation values indicating at least one gradation for the second color component, and a plurality of sixth gradation values indicating at least one gradation for the third color component,

each of the plurality of pieces of second measurement data includes a fourth brightness value indicating brightness of reflected light of colored light corresponding to the first color component having the fourth gradation value, a fifth brightness value indicating brightness of reflected light of colored light corresponding to the second color component having the fifth gradation value, and a sixth brightness value indicating brightness of reflected light of colored light corresponding to the third color component having the sixth gradation value, and

a difference value between a lowest fourth gradation value and a second lowest fourth gradation value among the plurality of fourth gradation values included in the plurality of pieces of second gradation data is smaller than a difference value between the highest first gradation value and the second highest first gradation value among the plurality of first gradation values.

7.  The control method for a projecting apparatus according to claim 6, wherein

    only the plurality of types of first colored light are projected on a second area of the projection surface, and
    the correction of the color of the image is to reduce color unevenness in the first area and to correct brightness of the second area to be equal to brightness of the first area.

8.  The control method for a projecting apparatus according to claim 6, wherein

    the plurality of first gradation values included in the plurality of pieces of first gradation data include a first value, a second value larger than the first value, and a third value larger than the second value,
    the plurality of fourth gradation values included in the plurality of pieces of second gradation data include a fourth value, a fifth value larger than the fourth value, and a sixth value larger than the fifth value,
    the second value and the fourth value are equal to each other, and
    the third value and the fifth value are equal to each other.

9.  The control method for a projecting apparatus according to claim 6, wherein
    projecting the plurality of types of first colored light from the first projecting apparatus and projecting the plurality of types of second colored light from the second projecting apparatus are synchronized with each other.

10. A non-transitory computer-readable storage medium storing a program that controls a projecting apparatus, the program comprising causing the projecting apparatus to execute

    acquiring a plurality of pieces of measurement data based on an output from a sensor that measures reflected light of a plurality of types of colored light, which correspond one-to-one to a plurality of pieces of gradation data, reflected by a projection surface when the plurality of types of colored light are projected from a projecting apparatus onto the projection surface based on the plurality of pieces of gradation data, and
    calculating correction data for correcting a color of an image displayed on the projection surface based on the plurality of pieces of gradation data and the plurality of pieces of measurement data, wherein
    the plurality of pieces of gradation data include a plurality of first gradation values indicating at least one gradation for a first color component, a plurality of second gradation values indicating at least one gradation for a second color component, and a plurality of third gradation values indicating at least one gradation for a third color component,
    the plurality of pieces of measurement data include a first brightness value indicating brightness of reflected light of colored light corresponding to the first color component having the first gradation value, a second brightness value indicating brightness of reflected light of colored light corresponding to the second color component having the second gradation value, and a third brightness value indicating brightness of reflected light of colored light corresponding to the third color component having the third gradation value, and

a difference value between a lowest first gradation value and a second lowest first gradation value among the plurality of first gradation values included in the plurality of pieces of gradation data is smaller than a difference value between a highest first gradation value and a second highest first gradation value among the plurality of first gradation values input.

FIG. 1

EP 4 718 839 A1

# FIG. 2

10A

## FIRST PROJECTING APPARATUS

11 — PROJECTOR

12 — IMAGING DEVICE

13

### PROCESSING DEVICE

131 — PROJECTION CONTROLLER

132 — IMAGING CONTROLLER

133 — IMAGE ANALYZER

134 — CORRECTION VALUE CALCULATOR

135 — IMAGE ACQUISITION UNIT

136 — CORRECTOR

137 — COMMUNICATION CONTROLLER

14

### STORAGE DEVICE

PR1

CONTROL PROGRAM

15

### COMMUNICATION DEVICE

## FIG. 3

OUTPUT LUMINANCE

COLOR UNEVENNESS CORRECTION EXPECTED

0

GRADATION A  GRADATION B  GRADATION C  INPUT GRADATION

## FIG. 4

OUTPUT LUMINANCE

BRIGHTNESS CORRECTION EXPECTED

0

GRADATION B'  GRADATION C'  GRADATION D  INPUT GRADATION

## FIG. 5

OUTPUT
LUMINANCE

BRIGHTNESS
CORRECTION
EXPECTED

COLOR
UNEVENNESS
CORRECTION
EXPECTED

0    GRADATION    GRADATION    GRADATION    GRADATION     INPUT

A        B =        C =        D     GRADATION

GRADATION GRADATION

B'         C'

## FIG. 6

PI1                      PI2

PT2       PT1       PT4

(PT3)

RL2       RL1       RL3

(NR)       (DR)       (NR)

| FIRST PROJECTING APPARATUS | 10A (10) | SECOND PROJECTING APPARATUS | 10B (10) |

## FIG. 7

```
                                        ┌── 136
┌──────────────────────────────────┐
│  ┌────────────────────────────┐   │
│  │      BRIGHTNESS            │───┼─── LC
│  │  CORRECTION CIRCUIT        │   │
│  └────────────────────────────┘   │
│                                    │
│  ┌────────────────────────────┐   │
│  │   COLOR UNEVENNESS         │───┼─── UC
│  │  CORRECTION CIRCUIT        │   │
│  └────────────────────────────┘   │
└──────────────────────────────────┘
```

## FIG. 8

```
              ┌──────────────┐
              │    START     │
              └──────┬───────┘
                     │
                     ▼
┌──────────────────────────────────────────────────┐
│  CALCULATE CORRECTION VALUES OF BRIGHTNESS AND     │  [S1]
│ COLOR UNEVENNESS OF GRADATIONS OTHER THAN BLACK    │
└──────────────────────┬─────────────────────────────┘
                       │
                       ▼
┌──────────────────────────────────────────────────┐
│  PROJECT MEASUREMENT PATTERN FOR BLACK CORRECTION  │  [S2]
└──────────────────────┬─────────────────────────────┘
                       │
                       ▼
┌──────────────────────────────────────────────────┐
│  IMAGE MEASUREMENT PATTERN AND MEASURE COLOR       │  [S3]
└──────────────────────┬─────────────────────────────┘
                       │
                       ▼
┌──────────────────────────────────────────────────┐
│        CALCULATE CORRECTION VALUE                  │  [S4]
│  FOR OBTAINING TARGET BRIGHTNESS AND COLOR         │
└──────────────────────┬─────────────────────────────┘
                       │
                       ▼
┌──────────────────────────────────────────────────┐
│      SET CORRECTION VALUE IN CORRECTOR             │  [S5]
└──────────────────────┬─────────────────────────────┘
                       │
                       ▼
              ┌──────────────┐
              │     END      │
              └──────────────┘
```

FIG. 9

EP 4 718 839 A1

FIG. 10

EP 4 718 839 A1

FIG. 11

EP 4 718 839 A1

## FIG. 12

OUTPUT LUMINANCE

INTERPOLATION CURVE R(r, 34, 34)

R(95,34,34)

R(34,34,34)

R(60,34,34)

R(22,34,34)

R(0,34,34)

0    22    34    60    95    INPUT GRADATION

## FIG. 13

OUTPUT LUMINANCE

INTERPOLATION CURVE G(r, 34, 34)

G(95,34,34)

G(34,34,34)

G(60,34,34)

G(22,34,34)

G(0,34,34)

0    22    34    60    95    INPUT GRADATION

## FIG. 14

OUTPUT LUMINANCE

INTERPOLATION CURVE B(r, 34, 34)

B(95,34,34)

B(34,34,34)

B(22,34,34)
B(60,34,34)

B(0,34,34)

0          22      34        60                95      INPUT
GRADATION

## FIG. 15

OUTPUT LUMINANCE

R(34,95,34)

INTERPOLATION CURVE R(34, g, 34)

R(34,34,34)

R(34,22,34)
R(34,60,34)

R(34,0,34)

0          22      34        60                95      INPUT
GRADATION

## FIG. 16

OUTPUT LUMINANCE

INTERPOLATION CURVE G(34, g, 34)

G(34,95,34)

G(34,34,34)

G(34,22,34)

G(34,60,34)

G(34,0,34)

0    22    34    60    95    INPUT GRADATION

## FIG. 17

OUTPUT LUMINANCE

B(34,95,34)

INTERPOLATION CURVE B(34, g, 34)

B(34,34,34)

B(34,22,34)

B(34,60,34)

B(34,0,34)

0    22    34    60    95    INPUT GRADATION

## FIG. 18

OUTPUT LUMINANCE

INTERPOLATION CURVE R(34, 34, b)

R(34,34,95)

R(34,34,34)

R(34,34,22)          R(34,34,60)

R(34,34,0)

0        22    34      60           95      INPUT
GRADATION

## FIG. 19

OUTPUT LUMINANCE

G(34,34,95)

INTERPOLATION CURVE G(34, 34, b)

G(34,34,34)

G(34,34,22)          G(34,34,60)

G(34,34,0)

0        22    34      60           95      INPUT
GRADATION

## FIG. 20

## FIG. 21

| | Europäisches Patentamt European Patent Office Office européen des brevets | **EUROPEAN SEARCH REPORT** | **Application Number** EP 25 20 4538 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/094968 A1 (HORIKAWA FUMIYA [JP]) 21 March 2024 (2024-03-21) | 1-5,10 | INV. H04N9/31 |
| A | * figure 1 * * paragraph [0018] - paragraph [0037] * * figure 2 * * figure 3 * * paragraph [0036] - paragraph [0043] * * figure 4 * * figure 5 * * paragraph [0053] - paragraph [0065] * * figure 6 * * paragraph [0075] - paragraph [0080] * * paragraph [0047] - paragraph [0051] * ----- | 6-9 | |
| X | JP 2010 066352 A (SEIKO EPSON CORP) 25 March 2010 (2010-03-25) | 1-5 | |
| A | * paragraph [0005] - paragraph [0007] * * paragraph [0010] * * paragraph [0015] - paragraph [0022] * * figure 1 * * figure 2 * ----- | 6-9 | |
| | | | TECHNICAL FIELDS SEARCHED (IPC) |
| A | US 2011/057943 A1 (IVASHIN VICTOR [US]) 10 March 2011 (2011-03-10) * the whole document * ----- | 1-9 | H04N |

The present search report has been drawn up for all claims

| Place of search | Date of completion of the search | Examiner |
|---|---|---|
| The Hague | 15 January 2026 | Lim, Johan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 718 839 A1

## ANNEX TO THE EUROPEAN SEARCH REPORT
## ON EUROPEAN PATENT APPLICATION NO.

EP 25 20 4538

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2026

| Patent document cited in search report | | | Publication date | Patent family member(s) | | | Publication date |
|---|---|---|---|---|---|---|---|
| US 2024094968 | A1 | | 21-03-2024 | CN | 117750000 | A | 22-03-2024 |
| | | | | JP | 7593382 | B2 | 03-12-2024 |
| | | | | JP | 2024043698 | A | 02-04-2024 |
| | | | | US | 2024094968 | A1 | 21-03-2024 |
| JP 2010066352 | A | | 25-03-2010 | NONE | | | |
| US 2011057943 | A1 | | 10-03-2011 | CN | 102023465 | A | 20-04-2011 |
| | | | | JP | 5672848 | B2 | 18-02-2015 |
| | | | | JP | 2011059681 | A | 24-03-2011 |
| | | | | US | 2011057943 | A1 | 10-03-2011 |

EPO FORM P0459

For more details about this annex : see Official Journal of the European Patent Office, No. 12/82

35

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024168461 A

- JP 2016161918 A